# EUROPÄISCHE PATENTANMELDUNG

(11) **EP 4 851 575 A1**
(43) Veröffentlichungstag der Anmeldung: **09.12.2026**
(21) Anmeldenummer: 25180754.1
(22) Anmeldetag: 04.06.2025
(51) Int. Cl.: G01B 21/04, G05B 19/401

(54) **COMPUTER-IMPLEMENTIERTES VERFAHREN ZUM ERZEUGEN EINES MESSPROGRAMMS FÜR EINE VERMESSUNG MINDESTENS EINES MERKMALS EINES BAUTEILS**

(71) Anmelder: Carl Zeiss Industrielle Messtechnik GmbH, 73447 Oberkochen (DE)
(72) Erfinder: Freytag, Alexander, 07745 Jena (DE); Schmal, Zeno, 73447 Oberkochen (DE)
(74) Vertreter: Altmann Stößel Dick Patentanwälte PartG mbB

(57) **Zusammenfassung**

Es wird ein Computer-implementiertes Verfahren zum Erzeugen eines Messprogramms für eine Vermessung mindestens eines Merkmals (110) eines Bauteils (112) mit einem, eine Punktewolke erzeugendem, Messsystem (114) vorgeschlagen. Das Verfahren umfasst die folgenden Schritte:
i) (116) Bereitstellen eines Computermodells des Bauteils (112) und eines initialen Messprogramms zur Vermessung des Merkmals (110) des Bauteils (112) mit dem Messsystem (114);
ii) (118) Erzeugen einer initialen Punktewolke des Merkmals (110) durch Simulieren der Vermessung des Merkmals des Bauteils (112) unter Berücksichtigung des initialen Messprogramms mit dem Messsystem (114);
iii) (120) Bestimmen, unter Verwendung mindestens eines Prozessors (122), eines Ziel-Messprogramms durch Evaluieren der initialen Punktewolke unter Verwendung von historischen Daten, wobei die historischen Daten Referenz-Punktewolken von Referenzmerkmalen und zugehörigen Referenz-Messprogrammen umfassen.

## Beschreibung

### Technisches Gebiet

Die Erfindung betrifft ein computer-implementiertes Verfahren zum Erzeugen eines Mess-programms für eine Vermessung mindestens eines Merkmals eines Bauteils mit einem, eine Punktewolke erzeugendem, Messsystem, ein Verfahren zur Vermessung mindestens eines Merkmals eines Bauteils mit einem, eine Punktewolke erzeugendem, Messsystem und ein Messsystem.

### Technischer Hintergrund

Bauteile müssen vermessen werden, um deren Qualität sicherzustellen. Dazu kann eine optische Messtechnik genutzt werden, beispielsweise für ein optisches Messen eines Merkmals, insbesondere eines Prüfmerkmals an einem Bauteil und/oder einem Werkstück. Für das optische Messen mit optischer Sensorik kann ein Messprogramm, beispielsweise ein CNC-Messprogramm, erstellt werden. Das Messen des Merkmals erfolgt dabei auf Basis des Mess-Programms, welches unter anderem Sensorpositionierungen, Sensorbewegung, Sensoreinstellungen, sogenannte Settings, usw. definiert.

Das optische Messen kann eine Punktewolke des Prüfmerkmals liefern. Die Punktewolke kann weiter analysiert werden, und es können beispielsweise Maße wie Durchmesser, Position, Länge, Distanz und weitere als Ist-Wert ermittelt werden. Die ermittelten Maße können anschließend abgeglichen und Abweichungen gegenüber Soll-Werten erkannt werden. Basis für alle Mess-Analysen ist die Bauteilausrichtung und die erfasste Punktewolke des Prüfmerkmals. Ist die Punktewolke schlecht, bspw. deckt sie nicht vollständig und/oder ausreichend das Merkmal ab, so kann jegliche nachfolgende Analyse unbrauchbar sein.

Das Mess-Programm muss an der Maschine und dem Bauteil in der Realität eingefahren werden, d.h., es muss derart angepasst werden, dass die resultierende Punktewolke von ausreichender Qualität ist. Dazu werden die Punktewolken, welche durch einen optischen Sensor erzeugt werden, qualifiziert im Hinblick darauf, ob sie für die vorzunehmende Messaufgabe geeignet sind. Insbesondere kann bewerten werden, ob das aktuelle Messprogramm für dieses konkrete Bauteil in dieser Ausrichtung geeignet ist. Die Beurteilung kann mittels eines Live-Bildes der Punktewolke erfolgen, bei der ein Operator erkennen und bewerten kann, ob die Qualität der Punktewolke ausreichend gut ist. Beispielweise kann die Punktewolke an einem Display betrachtet werden, ggf. deren Darstellung in 3D angepasst werden, beispielweise rotiert werden. Für den Fall, dass die Punktewolke als "gut" bewertet wird, kann das Mess-Programm abgespeichert werden. Falls die Punktewolke jedoch "nicht gut" ist, dann muss das Mess-Programm angepasst werden. Beispielweise, für die Vermessung eines Lochs, welches an einer Seite einen Grat aufweist, kann bei einem Scan mit Richtung entlang des Grats dieser zu einer ungenügenden Messung führen. Eine zusätzliche Messung vertikal kann eine bessere Punktewolke erzeugen. Beispielweise für den Fall, in welchem eine Messung nicht ausreichend Punkte erzeugt, bspw. bei spiegelnden oder absorbierenden Oberflächen, kann eine bessere Messung durch Änderung der Sensorparameter wie Lichtstärke, Belichtungszeit, usw. erzielt werden. Der Prozess, umfassend Aufnehmen der Punktewolke mit einem Messprogramm, Bewerten der Punktewolke, und ggf. Anpassen des Messprogramms, kann als Debugging bezeichnet werden. Das Debugging kann auf der Messmaschine, insbesondere in Verbindung mit dem Bauteil, einer Haltevorrichtung, usw. erfolgen.

Wie oben beschrieben, kann die Bewertung der Punktewolke durch einen Experten erfolgen, welcher die Punktewolke nach der Aufnahme visuell betrachtet. Dieses kann etwa 1 bis 3 Minuten pro Punktewolke in Anspruch nehmen. Bei ungenügender Qualität der Punktewolke führt der Experte die Anpassung des Messprogramms auf Basis seiner Erfahrung durch. Dieses kann bei einer großen Anzahl zu vermessender Merkmale zu einem hohen Zeitbedarf führen. Wenn beispielsweise für eine Fahrzeug-Rohkarosserie bis zu 4000 Merkmale zu vermessen sind, dann würde dieses zwischen 8 und 25 Arbeitstage zusätzlich für die Optimierung der Punktewolke bedeuten. Der Prozess kann langsam, und wegen manueller Ausführung teuer sein, insbesondere wegen des Zeitbedarfs und hohen Opportunitätskosten, da das eigentliche Messen noch nicht läuft. Weiter ist der bekannte manuelle Prozess abhängig vom Expertenwissen, schlecht wiederholbar, schlecht übertragbar und schlecht skalierbar.

EP 3 403 051 B1 beschreibt ein Verfahren zum Vorgeben von Vorgabedaten für eine Vermessung eines zu vermessenden Werkstücks durch ein Koordinatenmessgerät und/oder für eine Auswertung von Messergebnissen einer Vermessung eines vermessenen Werkstücks durch ein Koordinatenmessgerät. Ein zu bestimmendes Prüfmerkmal, das bei der Vermessung des Werkstücks vermessen und bei der Auswertung der Messergebnisse bestimmt werden soll, wird hinsichtlich folgender Prüfmerkmal-Eigenschaften festgelegt: a) Dimension des Prüfmerkmals, b) Toleranzart und c) zulässiger Toleranzbereich. Alternativ werden Informationen empfangen, durch die das zu bestimmende Prüfmerkmal hinsichtlich der Prüfmerkmal-Eigenschaften a) bis c) festgelegt ist. Aus einer Menge von vorhandenen Prüfmerkmalen, für die jeweils zugeordnete Daten für eine Vermessung eines Werkstücks und/oder für eine Auswertung von Messergebnissen einer Vermessung eines Werkstücks gespeichert sind, wird durch Ermittlung, ob ein vorgegebenes Ähnlichkeitskriterium erfüllt ist, ein dem zu bestimmenden Prüfmerkmal ähnliches vorhandenes Prüfmerkmal ermittelt. Bei der Ermittlung, ob das vorgegebene Ähnlichkeitskriterium erfüllt ist, wird eine Ähnlichkeit der Prüfmerkmal-Eigenschaften a) bis c) des zu bestimmenden Prüfmerkmals einerseits und des vorhandenen Prüfmerkmals andererseits festgestellt. Die dem ähnlichen vorhandenen Prüfmerkmal zugeordneten Daten werden abgerufen und als Vorgabedaten für den Ablauf der Vermessung des zu vermessenden Werkstücks und/oder für den Ablauf der Auswertung von Messergebnissen der Vermessung des vermessenen Werkstücks festgelegt. EP 3 403 051 B1 beschreibt, dass auf Basis der Ähnlichkeit der gegebenen Prüfmerkmal-Eigenschaften a)-c) ein Einstellungsvorschlag erzeugt wird. Dieser kann jedoch ungenügend sein.

### Aufgabe der Erfindung

Es wäre daher wünschenswert ein computer-implementiertes Verfahren zum Erzeugen eines Messprogramms für eine Vermessung mindestens eines Merkmals eines Bauteils mit einem, eine Punktewolke erzeugendem, Messsystem, ein Verfahren zur Vermessung mindestens eines Merkmals eines Bauteils mit einem, eine Punktewolke erzeugenden, Messsystem und ein Messsystem bereitzustellen, welche die Nachteile bekannter Verfahren und Vorrichtungen zumindest weitgehend vermeiden. Insbesondere soll ein Verfahren bereitgestellt werden, welches eine effiziente, automatisierte Durchführung des Debugging-Prozesses ermöglicht. Dieses Verfahren soll ein Erzeugen eines Messprogramm für eine Messung von Merkmalen eines Bauteiles ermöglichen, sodass die entstehenden Punktewolken geeignet für nachfolgende Analysen sind.

### Allgemeine Beschreibung der Erfindung

Diese Aufgabe wird adressiert durch ein computer-implementiertes Verfahren zum Erzeugen eines Messprogramms für eine Vermessung mindestens eines Merkmals eines Bauteils mit einem, eine Punktewolke erzeugendem, Messsystem, ein Verfahren zur Vermessung mindestens eines Merkmals eines Bauteils mit einem, eine Punktewolke erzeugendem, Messsystem und ein Messsystem mit den Merkmalen der unabhängigen Patentansprüche. Vorteilhafte Weiterbildungen, welche einzeln oder in beliebiger Kombination realisierbar sind, sind in den abhängigen Ansprüchen dargestellt.

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben den durch diese Begriffe eingeführten Merkmalen, keine weiteren Merkmale vorhanden sind, oder auf Situationen, in welchen ein oder mehrere weitere Merkmale vorhanden sind. Beispielsweise kann sich der Ausdruck "A hat B", "A weist B auf", "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin wird darauf hingewiesen, dass die Begriffe "mindestens ein" und "ein oder mehrere" sowie grammatikalische Abwandlungen dieser Begriffe, wenn diese in Zusammenhang mit einem oder mehreren Elementen oder Merkmalen verwendet werden und ausdrücken sollen, dass das Element oder Merkmal einfach oder mehrfach vorgesehen sein kann, in der Regel lediglich einmalig verwendet werden, beispielsweise bei der erstmaligen Einführung des Merkmals oder Elementes. Bei einer nachfolgenden erneuten Erwähnung des Merkmals oder Elementes wird der entsprechende Begriff "mindestens ein" oder "ein oder mehrere" in der Regel nicht mehr verwendet, ohne Einschränkung der Möglichkeit, dass das Merkmal oder Element einfach oder mehrfach vorgesehen sein kann.

Weiterhin werden im Folgenden die Begriffe "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden soll. Weiterhin sollen durch diese einleitenden Ausdrücke sämtliche Möglichkeiten, die hierdurch eingeleiteten Merkmale mit anderen Merkmalen zu kombinieren, seien es optionale oder nicht-optionale Merkmale, unangetastet bleiben.

In einem ersten Aspekt der vorliegenden Erfindung wird ein computer-implementiertes Verfahren zum Erzeugen eines Messprogramms für eine Vermessung mindestens eines Merkmals eines Bauteils mit einem, eine Punktewolke erzeugendem, Messsystem vorgeschlagen.

Das Verfahren umfasst die folgenden Schritte:
i) Bereitstellen eines Computermodells des Bauteils und eines initialen Messprogramms zur Vermessung des Merkmals des Bauteils mit dem Messsystem;
ii) Erzeugen einer initialen Punktewolke des Merkmals durch Simulieren der Vermessung des Merkmals des Bauteils unter Berücksichtigung des initialen Messprogramms mit dem Messsystem;
iii) Bestimmen, unter Verwendung mindestens eines Prozessors, eines Ziel-Messprogramms durch Evaluieren der initialen Punktewolke unter Verwendung von historischen Daten, wobei die historischen Daten Referenz-Punktewolken von Referenzmerkmalen und zugehörigen Referenz-Messprogrammen umfassen.

Die Verfahrensschritte können in der angegebenen Reihenfolge durchgeführt werden, wobei einer oder mehrere der Schritte zumindest teilweise auch gleichzeitig durchgeführt werden können und wobei einer oder mehrere der Schritte mehrfach wiederholt werden können. Darüber hinaus können weitere Schritte unabhängig davon, ob sie hier erwähnt werden oder nicht, zusätzlich ausgeführt werden.

Das Verfahren ermöglicht, dass das manuelle Debugging zumindest reduziert wird oder sogar vollständig vermieden werden kann. Ein erheblicher Zeitaufwand bei der Beurteilung der Punktewolken durch den Anwender kann eingespart werden. Durch eine automatisierte Anpassung des Messprogramms an das vorliegende Merkmal kann die Debugging-Zeit deutlich reduziert werden, da kein/weniger manuelle Anpassung nötig ist. Damit kann schneller ein lauffähiges Mess-Programm verfügbar sein, d.h. das erfindungsgemäße Verfahren ermöglicht eine Zeit- und Kostenersparnis und kann skalierbarer sein, da weniger Spezialisten-Bedarf erforderlich ist. Eine erhöhte Reproduzierbarkeit kann erreicht werden durch geringere Abhängigkeit vom Operator. Darüber hinaus kann eine verbesserte Mess-Simulations-Qualität für einen digitalen Zwilling des Messprozesses erreicht werden bevor die Messung das erste Mal in der Wirklichkeit durchgeführt wird. Eine Fehlprogrammierung durch den Anwender wird somit unwahrscheinlicher.

Der Begriff "computer-implementiert", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Prozess beziehen, welcher vollständig oder teilweise unter Verwendung von Datenverarbeitungsmitteln implementiert ist, insbesondere unter Verwendung mindestens eines Prozessors. Das computerimplementierte Verfahren, insbesondere die Verfahrensschritte i) bis iii), können automatisch durchgeführt werden, insbesondere voll automatisiert.

Die Verfahrensschritte i) bis iii) können unter Verwendung mindestens eines Prozessors ausgeführt werden. Der Begriff "Prozessor", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine beliebige Logikschaltung, zum Ausführen grundlegender Operationen eines Computers oder Systems, beziehen und/oder allgemein auf eine Vorrichtung, welche zum Ausführen von Berechnungen oder logischen Operationen eingerichtet ist. Der Prozessor kann eine Datenverarbeitungseinheit aufweisen. Der Prozessor kann beispielsweise eine arithmetisch-logische Einheit (ALU), eine Gleitkommaeinheit (FPU), wie einen mathematischen Coprozessor oder numerischen Coprozessor, eine Mehrzahl von Registern, und einen Arbeitsspeicher, beispielsweise einen Cache Arbeitsspeicher aufweisen. Der Prozessor kann einen Multi-Core-Prozessor aufweisen. Der Prozessor kann eine Graphics Processing Unit (GPU) aufweisen. Der Prozessor kann eine Tensor Processing Unit (TPU) aufweisen. Der Prozessor kann eine Zentrale Verarbeitungseinheit (CPU) aufweisen. Alternativ oder zusätzlich kann der Prozessor eine oder mehrere Anwendungsspezifische integrierte Schaltungen (englisch application-specific integrated circuits, ASICs) und/oder eine oder mehrere Field Programmable Gate Arrays (FPGAs) oder ähnliches aufweisen.

Der Begriff "Bauteil", auch als Messobjekt oder Werkstück bezeichnet, wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann sich, ohne Beschränkung, insbesondere auf ein beliebiges Objekt beziehen. Im Folgenden werden die Begriffe Bauteil, Werkstück und Messobjekt austauschbar verwendet. Beispielsweise kann das Bauteil ein Kraftfahrzeug oder ein Teil eines Kraftfahrzeugs, sein. Auch andere Bauteile sind jedoch denkbar.

Der Begriff "Merkmal eines Bauteils", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein Teil und/oder Element eines gesamten Bauteiles oder sich auf das Bauteil selbst beziehen. Das Bauteil kann ein Merkmal oder eine Mehrzahl von Merkmalen aufweisen. Das Merkmal kann beispielsweise auf einer Fläche ein Flächenpunkt sein. Das Merkmal kann beispielsweise ein Bolzen sein. Das Merkmal kann beispielsweise eine Bohrung sein. Das Merkmal kann beispielsweise ein zylinderförmiges Objekt sein. Das Merkmal kann beispielsweise eine Mutter sein. Das Merkmal kann beispielsweise eine Kante sein. Das Merkmal kann ein zu vermessendes Merkmal sein.

Beispielsweise kann das Bauteil eine Autotür sein und das zu vermessende Merkmal kann ein Loch sein. Ein davon zu bestimmendes, quantitatives Attribut kann ein Durchmesser, insbesondere eine Durchmesserabweichung sein.

Beispielsweise kann das Bauteil eine Autotür und das zu vermessende Merkmal kann ein Bolzen sein. Ein beschreibendes Attribut kann ein Material und/oder eine Oberflächenbeschaffenheit sein, beispielweise Eisen und/oder geschliffen. Ein davon zu bestimmendes, quantitatives Attribut kann eine Zylinderform, insbesondere eine Abweichung von einer Zylinderform sein. Alternativ oder zusätzlich kann ein davon zu bestimmendes, quantitatives Attribut kann ein Durchmesser, insbesondere eine Durchmesserabweichung sein.

Der Begriff "Vermessung", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf mindestens eine quantitative Messung und/oder mindestens ein qualitatives Prüfen und/oder Inspizieren des Merkmals beziehen. Auch eine Kombination aus qualitativer und quantitativer Vermessung ist denkbar, beispielsweise wenn mehrere Sensoren von dem Messsystem umfasst sind. Die Vermessung kann beispielsweise mittels mindestens einem mechanischen Messprinzip und/oder mindestens einem optischen Messprinzip erfolgen. Eine qualitative Vermessung kann beispielsweise dahingehend erfolgen, dass ein Attribut des Merkmals erfasst und/oder bestimmt wird. Ein Ergebnis einer qualitativen Vermessung kann mindestens eine Attributaussage sein, beispielsweise "gut" oder "schlecht" oder "nass" oder "trocken". Eine quantitative Vermessung kann beispielsweise dahingehend erfolgen, dass das Messsystem, insbesondere mindestens ein Sensor, mindestens eine erfassbare Messgröße generiert, beispielsweise mindestens ein Messsignal. Beispielsweise kann ein quantitatives Attribut eine Längenabweichung des Merkmals sein, wie beispielsweise eine Ausdehnung in mm.

Der Begriff "Attribut" des Merkmals, wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Eigenschaft eines Merkmals beziehen, welche eine physikalische und/oder geometrische Eigenschaft des Merkmals repräsentieren kann.

Beispielsweise kann das Attribut eine physikalische Eigenschaft des Merkmals sein. Beispielsweise kann die physikalische Eigenschaft mindestens eine Eigenschaft sein ausgewählt aus der Gruppe bestehend aus: Materialart, Materialeigenschaften, Rauheit, Glattheit, Pose des Merkmals am Bauteil, Farbe.

Beispielsweise kann das Attribut eine geometrische Eigenschaft des Merkmals sein. Beispielsweise kann die geometrische mindestens eine Eigenschaft sein ausgewählt aus der Gruppe bestehend aus: Solldurchmesser, Abweichung gegenüber einem Solldurchmesser, Toleranz der Abweichung, Zylindrizität, Parallelität, Symmetrie.

Das Attribut kann ein beschreibendes Attribut sein. Beispielsweise kann ein beschreibendes Attribut eine physikalische Eigenschaft eines Merkmals repräsentieren (z.B. Materialart und/oder Oberflächenbeschaffenheit wie Eisen, geschliffen) oder eine geometrische Eigenschaft eines Merkmals repräsentieren (z.B. Solldurchmesser).

Das Attribut kann ein zu bestimmendes Attribut sein. Beispielsweise kann ein zu bestimmendes Attribut sich auf eine geometrische Eigenschaft eines Merkmals beziehen (z.B. Abweichung gegenüber einem Solldurchmesser oder eine Zylinderformabweichung). Dies kann auch als zu bestimmende Messgröße bezeichnet werden.

Das Attribut kann nominal sein, z.B.: ""nass" oder "trocken"", Materialart, Farbe, usw.. Das Attribut kann ordinal sein, z.B. Abweichung gegenüber einem Solldurchmesser ist "ok", "grenzwertig", oder "nicht ok". Das Attribut kann kardinal sein, z.B., Solldurchmesser in mm, Abweichung gegenüber einem Solldurchmesser in mm. Das Erfassen bzw. Bestimmen eines zu bestimmenden nominalen Attributs kann auch als qualitatives Vermessen bezeichnet werden. Das Erfassen bzw. Bestimmen eines zu bestimmenden ordinalen Attributs kann auch als quantitatives Vermessen bezeichnet werden.

Der Begriff "System", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine aus mindestens zwei Komponenten zusammengesetzte Einheit beziehen, wobei die Komponenten eingerichtet sind, um funktionell zur Erreichung mindestens eines zwecks des Systems zusammen zu wirken. Die Komponenten können dabei miteinander mechanisch und/oder elektrisch verbunden sein, insbesondere reversibel.

Der Begriff "Messsystem", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein System beziehen, welches zur Vermessung mindestens eines Merkmals eines Bauteils geeignet ist. Das Messsystem kann mindestens einen Sensor umfassen ausgewählt aus der Gruppe bestehend aus: einem optischen Sensor; einem taktilen Sensor, einen Temperatursensor, insbesondere zur Infrarotmessung, einen Röntgensensor mit Röntgenquelle.

Beispielsweise kann der mindestens eine Sensor des Messsystems ein taktiler Sensor sein. Der Begriff "taktiler Sensor", auch als Taster bezeichnet, wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Sensor beziehen, welcher eingerichtet ist, mit der Oberfläche des Messobjekts in Wechselwirkung zu treten, beispielsweise mechanisch, und aus der Wechselwirkung mindestens einen Messwert zu erzeugen. Beispielsweise kann der Messwert mindestens eine Information über einen Antastpunkt umfassen. Der taktile Sensor weist mindestens ein taktiles Tastelement auf. Das taktile Tastelement kann mindestens einen Schaft und mindestens eine an diesem angeordnete Tasterkugel aufweisen. Der taktile Sensor kann ein schaltendes oder ein kontinuierlich messendes mechanisches Feedback generieren. Auch akustisches Feedback, elektrisches, oder digitales Feedback, beispielswiese Spannung liegt an ja/nein, sind denkbar. Beispielsweise kann der taktile Sensor eingerichtet sein einen Anpressdruck in eine Bewegung eines Elements zu überführen, beispielsweise auf Taster der öffnet bzw. schließt, oder in Bezug auf beispielsweise eine Spule, was Strom induziert. Beispielsweise kann der taktile Sensor als VAST Tastkopf von ZEISS ausgestaltet sein.

Beispielsweise kann das Messsystem auf mindestens einem optischen Messprinzip beruhen. Das Messsystem kann mindestens einen optischen Sensor aufweisen. Der Begriff "optischen Sensor" wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen beliebigen Sensor beziehen, welcher eingerichtet ist, das Merkmal und/oder mindestens eine Eigenschaft des Merkmals optisch zu erfassen, insbesondere durch die Aufnahme mindestens eines Bildes des Merkmals. Der optische Sensor kann mindestens eine Kamera aufweisen und optional weitere Elemente wie mindestens eine Beleuchtungsvorrichtung und mindestens ein Objektiv. Die Kamera kann eine Bilderfassungsvorrichtung aufweisen, wobei die Bilderfassungsvorrichtung mindestens eine CCD-Kamera und/oder mindestens eine CMOS-Kamera aufweist. Die Bilderfassungsvorrichtung kann eine Vielzahl von Pixeln aufweisen. Das Messsystem kann mindestens eine Beleuchtungsvorrichtung aufweisen. Die Beleuchtungsvorrichtung kann mindestens ein Element aufweisen ausgewählt aus der Gruppe bestehend aus: einer Durchlichtbeleuchtung; einer Auflichtbeleuchtung; einer Laserlichtquelle; einer Röntgenlichtquelle; einer Infrarotlichtquelle; einem Streifenlichtprojektor; einer Lichtquelle mit sequenziell veränderten Beleuchtungsfarben; einem Punktelaser; einem Linienlaser; einer winkelselektiven Beleuchtung, einer LED-Array-Beleuchtung. Dass Messsystem kann mindestens einen optischen Sensor umfassen. Das Messsystem kann eingerichtet sein für eine 2D oder 3D Vermessung. Verschiedene Möglichkeiten zur Anordnung des Sensors im Messsystem sind denkbar. Beispielsweise können zur Aufhängung oder Montage der Sensorik folgende Ausführungsformen denkbar sein: Montage an einem mehrachsigen CNC gesteuertem Verfahrgestell, jegliche Art von mehrachsiger CNC gesteuerter Robotik oder handgeführter Sensor oder handgeführter Sensor an einem Verfahrgestell, sowie fest eingebaute Sensorik, an welcher das Bauteil zum Messen entlang/vorbei geführt wird (CNC gesteuert oder von Hand). Der optische Sensor kann beispielsweise mindestens einen Sensor aufweisen ausgewählt aus der Gruppe bestehend aus: einer Kamera in Kombination mit Streifenlichtprojektion, beispielsweise ZEISS ATOS; einer Kamera in Kombination mit sequenziell veränderten Beleuchtungsfarben, beispielsweise ZEISS ABIS; einer Kamera mit Punktelaser-Beleuchtung, beispielsweise DotScan von ZEISS, einer Kamera mit Linienlaser-Beleuchtung, beispielsweise LineScan und EagleEye von ZEISS. Beispielsweise kann das Messsystem mindestens einen Röntgensensor mit Röntgenquelle aufweisen, beispielswiese für bildgebende Verfahren wie Röntgentomographie und Computertomographie (CT).

In einer Ausführungsform kann das Messsystem ein Koordinatenmessgerät sein. Der Begriff "Koordinatenmessgerät" wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Vorrichtung zur Vermessung mindestens eines Bauteils beziehen. Das Koordinatenmessgerät kann ein taktil messendes oder ein berührungslos, insbesondere optisch, messendes Koordinatenmessgerät sein.

Beispielsweise kann das Koordinatenmessgerät ein Portalmessgerät oder ein Brückenmessgerät sein. Das Koordinatenmessgerät kann einen Messtisch zur Auflage des Bauteils aufweisen. Das Koordinatenmessgerät kann ein luftgelagertes Koordinatenmessgerät oder ein Wälzgelagerte Koordinatenmessgerät sein. Das Koordinatenmessgerät kann mindestens ein Portal aufweisen, welches mindestens eine erste vertikale Säule, mindestens eine zweite vertikale Säule und eine die erste vertikale Säule und die zweite vertikale Säule verbindende Traverse aufweist. Mindestens eine vertikale Säule ausgewählt aus der ersten und zweiten vertikalen Säule kann auf dem Messtisch beweglich gelagert sein. Die horizontale Richtung kann eine Richtung entlang einer x-Achse sein. Das Koordinatenmessgerät kann ein Koordinatensystem, beispielsweise ein kartesisches Koordinatensystem oder ein Kugelkoordinatensystem, aufweisen. Auch andere Koordinatensysteme sind denkbar. Ein Ursprung oder Nullpunkt des Koordinatensystems kann beispielsweise durch einen Sensor des Koordinatenmessgeräts, insbesondere einem Sensor, beispielsweise einem taktilen Sensor, gegeben sein. Eine y-Achse kann senkrecht zur x-Achse, in einer Ebene der Auflagefläche des Messtischs verlaufen. Senkrecht zu der Ebene der Auflagefläche, in eine vertikale Richtung, kann sich eine z-Achse, auch longitudinale Achse genannt, erstrecken. Die vertikalen Säulen können sich entlang der z-Achse erstrecken. Die Traverse kann sich entlang der x-Achse erstrecken. Das Koordinatenmessgerät kann mindestens einen Messschlitten aufweisen, welcher entlang der Traverse beweglich gelagert ist. Der Messschlitten kann direkt oder mittels weiterer Bauteile mindestens eine Sensorvorrichtung, auch als Sensor bezeichnet, aufnehmen. In dem Messschlitten kann eine in eine vertikale Richtung, beispielsweise entlang der z-Achse, bewegliche Pinole gelagert sein. An einem unteren Ende, insbesondere einem in Richtung Auflagefläche zeigenden Ende, der Pinole kann beispielsweise mindestens ein Sensor angeordnet sein. Der Sensor kann taktil und/oder berührungslos an eine Oberfläche des Bauteils mittels eines mechanischen und/oder optischen Messsystems antasten.

Beispielsweise kann das Koordinatenmessgerät als ein Horizontalarm-Koordinatenmessgeräte ausgestaltet sein, beispielsweise als ein Multisensor-Horizontal-Arm Messgerät.

Beispielsweise kann das Koordinatenmessgerät mindestens einen Roboter umfassen.

Beispielsweise kann das Koordinatenmessgerät mit Röntgentomografie (CT) ausgestaltet sein. Das Koordinatenmessgerät kann mindestens einen Röntgensensor, beispielsweise mindestens ein Xray-Detektor, mit Röntgenquelle, beispielsweise mindestens eine Xray-Röhre, aufweisen, insbesondere mindestens einen Xray-Scanner. Für die Xray-Projektions-Aufnahmen kann ein Objekt in den Strahlengang zwischen Xray-Röhre und Xray-Detektor des Xray-Scanners gestellt werden, aufgenommen, und gedreht werden.

Der Begriff "Punktewolke", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Menge von Punkten eines Vektorraums beziehen. Die Punktwolke kann durch die enthaltenen Punkte definiert sein. Der Begriff "Punktewolke" wird vorliegend sowohl für eine Menge, der mit dem Messsystem aufgenommenen, Messwerte und deren Phasenraumkoordinate, insbesondere deren Raumkoordinaten, verwendet als auch für eine Menge von vorhergesagten Punkten, welche durch Simulieren der Vermessung des Merkmals des Bauteils mit dem Messsystem vorhergesagt werden. Jeder der Punkte der Punktewolke kann einen mit dem Messsystem erzeugten oder vorhergesagten Messwert entsprechen. Eine Position der Punkte in der Punktewolke kann durch den Messwert und die jeweilige Phasenraumkoordinate bestimmt sein, insbesondere durch ihre Raumkoordinaten.

Beispielsweise kann unter einer "Punktewolke" ein Polygonnetz (Mesh) verstanden werden. Das Polygonnetz kann ein Graph (miteinander verbundene Punkte), der aus mehreren umschlossenen Fläche (engl. face) besteht, sein, die optional in Gruppen gleicher Oberflächeausrichtung (engl. surface) gruppiert sind. In dem Spezialfall das alle Flächen Dreiecke sind, wird das Polygonnetz als trianguliert bezeichnet.

Der Begriff "Erzeugen einer Punktewolke", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein Erzeugen einer Mehrzahl von Messwerten in dem Vektorraum unter Verwendung des Messsystems und/oder durch Simulation einer Vermessung beziehen. Das Erzeugen kann insbesondere ein automatisches Erzeugen sein und/oder umfassen.

Der Begriff "Messprogramm", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Spezifizierung mindestens einer Vermessung des Merkmals beziehen. Das Messprogramm kann eine Mehrzahl von Elementen aufweisen, wie beispielsweise mindestens eine Messspezifikation, mindestens eine Messanweisung, und/oder mindestens ein Messablaufplan. Die Messspezifikation kann das zu vermessende Merkmal festlegen. Die Messanweisung kann mindestens eine Anweisung für die Durchführung der Vermessung umfassen. Der Messablaufplan kann eine Abfolge der Vermessung definieren. Das Messprogramm kann Informationen über mindestens eine Einstellung umfassen ausgewählt aus der Gruppe bestehend aus: Sensoreinstellung, insbesondere Beleuchtungsintensität, Beleuchtungsdauer, Aufnahmedauer, Empfindlichkeit, Blendenöffnung, Sensorstellung zum Bauteil, insbesondere Abstand und/oder Winkel zum Bauteil, Information über Start- und Endpunkt, Information über Verfahrweg, Information über Geschwindigkeit, Information über Beschleunigung, Information zum Verfahren entlang des Verfahrwegs. Start- und Endpunkt können identisch sein, bspw. im Fall einer StreifenlichtProjektion. Die Lichtquelle kann ein Streifenlichtprojektor sein, und der Sensor eine Kamera, die während der Aufnahme eines Bildes fest steht. Start- und Endpunkt können verschieden sein, bspw. im Fall eines Linienscanners oder Punktscanners, welcher sich während der Aufnahme bewegt, also Startpunkt und Endpunkt und Verfahrweg aufweist.

Der Begriff "Erzeugen eines Messprogramms", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein Erstellen und/oder ein Anpassen und/oder Optimieren eines Messprogramms beziehen. Das Erzeugen des Messprogramms kann ein Bestimmen eines Messprogramms, welches das Merkmal für die jeweilige Messaufgabe bestmöglich abdeckt, umfassen. Das Erzeugen des Messprogramms kann ein Debuggen umfassen.

Schritt i) umfasst ein Bereitstellen eines Computermodells des Bauteils und eines initialen Messprogramms zur Vermessung des Merkmals des Bauteils mit dem Messsystem.

Der Begriff "Computermodell des Bauteils", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen digitalen Datensatz beziehen, welcher das reale Bauteil möglichst genau repräsentiert. Das Computermodell kann beispielsweise ein CAD-Modell sein und/oder umfassen. Das Computermodell kann dreidimensional oder zweidimensional sein. Das Computermodell kann Produkt- und Fertigungsinformationen des Bauteils umfassen. Das Computermodell kann, alternativ oder zusätzlich, Messdaten, beispielsweise aus einer Prüfung und/oder einer Erfassung mindestens eines Merkmals des Bauteils, und/oder Zusatzinformation zur Ausgestaltung des Bauteils umfassen und/oder berücksichtigen. Das Computermodell des Bauteils kann Design-Daten des Bauteils umfassen. Weiter kann das Computermodell Design-Daten einer Haltevorrichtung für das Bauteil sowie Umgebungsbedingungen der Maschine umfassen.

Der Begriff "initiales Messprogramm", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein Startmessprogramm zur Vermessung des Merkmals des Bauteils mit dem Messsystem.

Der Begriff "Bereitstellen", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein Erzeugen und/oder ein Abfragen und/oder ein Abrufen und/oder ein Auswählen beziehen. Beispielsweise kann das Bereitstellen ein Abrufen von einer Datenquelle, beispielsweise einem Datenspeicher oder einer Datenbank, umfassen. Das Bereitstellen kann ein Laden, insbesondere ein Importieren, und/oder ein Generieren des Computermodells und/oder des initialen Messprogramms umfassen. Das Bereitstellen kann unter Verwendung mindestens einer Kommunikationsschnittstelle erfolgen. Der Begriff "Kommunikationsschnittstelle", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Gegenstand oder ein Element beziehen, das eine Grenze bildet, die für die Übertragung von Informationen konfiguriert ist. Insbesondere kann die Kommunikationsschnittstelle derart eingerichtet sein, dass sie Informationen von einem Prozessor, z. B. einem Computer, überträgt, z. B. um Informationen zu senden oder auszugeben, z. B. an ein anderes Gerät. Zusätzlich oder alternativ kann die Kommunikationsschnittstelle derart eingerichtet sein, dass sie Informationen auf einen Prozessor, z. B. einen Computer, überträgt, z. B. um Informationen zu empfangen. Die Kommunikationsschnittstelle kann insbesondere Mittel zum Übertragen oder Austauschen von Informationen bereitstellen. Insbesondere kann die Kommunikationsschnittstelle eine Datenübertragungsverbindung bereitstellen, z.B. Bluetooth, NFC, induktive Kopplung oder dergleichen. Beispielsweise kann die Kommunikationsschnittstelle mindestens ein Anschluss sein oder umfassen, der einen oder mehrere Netzwerk- oder Internetanschlüsse, einen USB-Anschluss und ein Diskettenlaufwerk umfasst. Die Kommunikationsschnittstelle kann ferner mindestens eine Anzeigevorrichtung umfassen. Bei der Kommunikationsschnittstelle kann es sich um mindestens eine Webschnittstelle handeln. Das Computermodell und/oder das initiale Messprogramm kann automatisch oder von einem Anwender ausgewählt werden von einer Mehrzahl von Computermodellen und/oder initialen Messprogrammen, beispielsweise unter Verwendung mindestens einer Anwenderschnittstelle.

Schritt ii) umfasst ein Erzeugen einer initialen Punktewolke des Merkmals durch Simulieren der Vermessung des Merkmals des Bauteils unter Berücksichtigung des initialen Messprogramms mit dem Messsystem.

Der Begriff "initiale Punktewolke", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine zu erwartende Punktewolke beziehen, welche bei einer Vermessung des Merkmals anhand des initialen Messprogramms erzeugt würde.

Der Begriff "Simulieren" und der Vorgang der "Simulation", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Prozess eines Nachbildens einer realen Vermessung beziehen, insbesondere einer Vermessung in der Wirklichkeit. Beispielsweise kann das Simulieren unter Verwendung von der Messsoftware ZEISS CALIGO erfolgen.

Das Erzeugen der initialen Punktewolke kann unter Verwendung mindestens eines Prozessors erfolgen. Der Begriff "Prozessor", wie er hier verwendet wird, ist ebenfalls ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen grundsätzlich beliebigen logischen Schaltkreis beziehen, welcher eingerichtet ist, um grundlegende Operationen eines Computers oder Systems durchzuführen, und/oder, auf eine Vorrichtung, welche eingerichtet ist, um Rechnungen oder logische Operationen durchzuführen. Insbesondere kann der Prozessor eingerichtet sein, um grundlegende Instruktionen umzusetzen, welche einen Computer oder ein Computersystem steuern. Beispielsweise kann der Prozessor mindestens eine Komponente aufweisen, ausgewählt aus der Gruppe bestehend aus: einer arithmetischen logischen Einheit (arithmetic logic unit, ALU); eine Fließkomma-Einheit (floating-point unit, FPU), wie beispielsweise einen mathematischen Coprozessor oder einen numerischen Coprozessor; eine Mehrzahl an Registern, insbesondere Register, welche eingerichtet sind, um Operanden an die ALU zu liefern und um Resultate von Operationen zu speichern; einen Speicher, insbesondere einen Datenspeicher, wie beispielsweise einen L1 und/oder L2 Cache-Datenspeicher. Insbesondere kann der Prozessor einen einzelnen Kern aufweisen oder auch mehrere Kerne. Insbesondere kann der Prozessor eine zentrale Prozessoreinheit (central processing unit, CPU) sein oder eine derartige zentrale Prozessoreinheit umfassen. Zusätzlich oder alternativ kann der Prozessor ein Mikroprozessor sein oder einen Mikroprozessor umfassen, so dass, insbesondere, die Komponenten des Prozessors in einem einzelnen integrierten Schaltkreis-Chip umfasst sein können. Alternativ oder zusätzlich kann der Prozessor jedoch auch einen oder mehrere anwendungsspezifische integrierte Schaltkreise (application-specific integrated circuits, ASICs), und/oder ein oder mehrere Graphics Processing Units (GPUs), und/oder eine oder mehrere Tensor Processing Units (TPUs) und/oder ein oder mehrere Feld-programmierbare Gate Arrays (field-programmable gate arrays, FPGAs) oder ähnliche Komponenten umfassen. Der Prozessor kann insbesondere eingerichtet sein, insbesondere durch Software Programmierung, um eine oder mehrere Simulationsoperationen durchzuführen.

Schritt iii) umfasst ein Bestimmen, unter Verwendung mindestens eines Prozessors, eines Ziel-Messprogramms durch Evaluieren der initialen Punktewolke unter Verwendung von historischen Daten, wobei die historischen Daten Referenz-Punktewolken von Referenzmerkmalen und zugehörigen Referenz-Messprogrammen umfassen.

Der Begriff "Ziel-Messprogramm", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein Ergebnis der Schritte i) bis iii) beziehen. Das Ziel-Messprogramm kann ein nach dem Prozess des Debuggens erzeugtes und/oder angepasstes Messprogramm sein.

Der Begriff "historische Daten", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf mit dem Messsystem und/oder einem, dem Messsystem ähnlichen, Messsystem erzeugte historische Messdaten und/oder synthetische Daten beziehen. Die historischen Daten können reale Daten sein, welche über die Zeit aufgesammelt wurden. Der Begriff "reale Daten", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf Daten beziehen, welche durch einen oder mittels einem ausgeführten Messprozess erzeugt und/oder entstanden und/oder erhalten worden sind bzw. aus diesen erhaltenen Daten abgeleitete Daten. Die realen Daten können eines oder mehreres: von dem Messsystem selbst, von einem Messsystem gleichen Typs stammen, von einem Messsystem eines anderen Typs aber gleicher Sensorart stammen.

Unter einem "ähnlichen Messsystem" kann beispielsweise eine Maschine vom gleichen Typ oder ein anderer Maschinentyp aber mit gleicher Sensorart verstanden werden. Der Begriff "synthetische Daten", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf zumindest teilweise durch Simulation erzeugte Daten beziehen. Die historischen Daten können aus digitalen Abbildern des Messprozesses stammen, etwa unter Verwendung eines digitalen Zwillings. Beispielsweise kann die Simulation unter Berücksichtigung physikalischer Gesetze erfolgen. Beispielsweise kann die Simulation Daten-getrieben sein, insbesondere unter Berücksichtigung von historischen Messprogrammen. Die historischen Daten können beispielsweise mit maschinellen Lernen erzeugt werden, bspw. mit Diffusion Modellen, wie beispielsweise in https://acade-mic.oup.com/nsr/article/11/8/nwae276/7740777 beschrieben.

Der Begriff "Evaluieren", wie er hier verwendet wird, ist ein weiter Begriff, dem seine gewöhnliche und gängige Bedeutung beigemessen werden soll, wie der Fachmann sie versteht.

Der Begriff ist nicht beschränkt auf eine spezielle oder angepasste Bedeutung. Der Begriff kann, ohne Beschränkung, sich insbesondere auf mindestens einen Prozess beziehen ausgewählt aus der Gruppe bestehend aus: Durchführen mindestens einer mathematischen Operation, beispielsweise einer Transformation, Ausführen mindestens eines Algorithmus, Anwenden eines, beispielsweise durch maschinelles Lernen (ML), trainierten Modelles auf die initiale Punktewolke und die historischen Daten. Beispielsweise kann das Evaluieren mindestens einen der folgenden Prozesse aufweisen: Ausführen eines Ähnlichkeitsvergleichs zwischen der (initialen) Punktewolke und mindestens einer Referenzpunktewolke aus den historischen Daten; Ausführen eines trainieren ML-Modelles, welches als Eingabe die initiale Punktewolke erhält und einen Vorschlag zu mindestens einem Teil des Ziel-Messpgrogramms generiert. Beispielsweise kann das Evaluieren mindestens einen der folgenden Prozesse aufweisen, insbesondere zusätzlich zu den zuvorgenannten: Auswertung einer Vollständigkeitsüberprüfung einer Punktewolke; Ausführung einer Anomalieerkennung auf einer Punktewolke, bspw. mit mindestens einem trainieren ML-Modell; und Ausführen der Bestimmung eines Qualitätsmaßes einer Punktewolke, bspw. mit mindestens einem trainieren ML-Modell. Die initiale Punktewolke kann direkt verarbeitet werden. Alternativ kann die initiale Punktwolke in eine andere Darstellung überführt werden, beispielsweise zu einem Graph. Auch eine Darstellung als Polygonnetz oder trianguliert ist denkbar. In Schritt iii) kann die initiale Punktewolke verwendet werden und/oder eine von dieser abgeleitete Information. Beispielsweise kann eine Evaluierung der initialen Punktewolke mittels einer feature extration erfolgen. Beispielsweise kann eine Evaluierung der initialen Punktewolke mittels eines Programms zur Verarbeitung der Punktewolke, welches die entsprechenden Punkte der Punktewolke automatisch ausfiltert und in ein Merkmalsergebnis berechnet, erfolgen.

Die historischen Daten umfassen Referenz-Punktewolken von Referenzmerkmalen und zugehörigen Referenz-Messprogrammen. Der Begriff "Referenzmerkmal", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein vorbekanntes, vordefiniertes, oder zeitlich früher gemessenes Merkmal beziehen. Der Begriff "Referenz-Messprogramm", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein vorbekanntes, vorbestimmtes, oder zeitlich früher erzeugtes Messprogramm beziehen, insbesondere zur Vermessung des Referenzmerkmals. Der Begriff "Referenz-Punktewolke", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine vorbekannte oder vorbestimmte und/oder zeitlich früher erzeugte Punktewolke beziehen, insbesondere eine unter Verwendung des Referenz-Messprogamms erzeugte Punktwolke bei der Vermessung des Referenz-Merkmals.

Beispielsweise können die historischen Daten Referenz-Punktewolken von Referenzmerkmalen mit, innerhalb von Toleranzen, gleichen Attributen wie das zu vermessende Merkmal und Informationen zu den Attributen der Referenzmerkmale umfassen. Beispielsweise könnten die historischen Daten mehrere oder alle Referenz-Punktewolken umfassen, die mit dieser Art Messsystem für diese Art von Bauteilen aufgenommen wurden. Beispielsweise könnten die historischen Daten mehrere oder alle Referenz-Punktewolken umfassen, die mit diesem Messsystem aufgenommen wurden. Beispielsweise könnten die historischen Daten mehrere oder alle Daten aus der, bspw. geographischen, Region umfassen. Beispielsweise könnten die historischen Daten mehrere oder alle Daten eines Kunden und/oder einer Kundengruppe umfassen. Beispielsweise könnten die historischen Daten alle zur Verfügung stehenden Daten umfassen.

Schritt iii) kann einen Vergleich der initialen Punktewolke und den historischen Referenz-Punktewolken umfassen. Der initialen Punktewolke ähnliche Referenz-Punktewolken können unter Berücksichtigung mindestens eines Ähnlichkeitsmaßes bestimmt werden. Als Ähnlichkeitsmaß kann mindestens eine Metrik verwendet werden, welche für zwei gegebene Punktewolken deren Ähnlichkeit bestimmt. Die Metrik kann ausgewählt sein aus der Gruppe bestehend aus: einer Earth-Mover-/Wasserstein-Distanz; einer Chamfer-Distanz; einer Hausdorff-Distanz, ein auf Basis von historischen Daten gelerntes Ähnlichkeitsmaß.

Beispielsweise kann der Vergleich, insbesondere überwachtes (engl. supervised), kontrastive Lernen für Graphen (engl. Graph Contrastive learning) umfassen. Es kann ein ML-Modell trainiert werden, welches einen Graphen in eine Repräsentation überführt. So können ähnliche Graphen in ähnliche Repräsentationen überführt werden (d.h., kleinere Abstände in dem Repräsentationsraum), und unähnliche Graphen in unähnliche Repräsentationen (d.h., größere Abstände in dem Repräsentationsraum). Dieses kann für Pärchen von Graphen (ähnliche sollen nah zusammen, unähnlich sollen weit auseinander), oder mit Triplets (zwei ähnliche und ein unähnliches - die ähnlichen sollen näher zusammen als je ein ähnliches und ein unähnliches) erfolgen. Die Punktewolken können als Graphen verstanden werden, und die Information für "ähnlich" oder "unähnlich" bspw. aus den Attributen abgeleitet werden, beispielsweise gleiches Bauteil, gleiche Art Merkmal, gleiche Materialart, usw. Auf diese Art kann das Ähnlichkeitsmaß nicht festgelegt auf bestimmte Annahmen sein, wie etwa ähnliche Menge von Punkten, oder ähnliche Dichte der Punkte, usw., sondern es kann auf Basis von historischen Daten gelernt werden, wann Punktewolken "ähnlich" sind.

Beispielsweise kann der Vergleich selbst-überwachtes Lernen (engl. Self-supervised Learning) (für Graphen) umfassen. Es kann eine Darstellung für Graphen gelernt werden, welche die Menge an vorliegenden Graphen gut "beschreiben" kann. Dies kann bspw. erfolgen, in dem ein ML-Modell während des Trainings eine leicht modifizierte Version des Graphen als Input erhält, diese in eine Repräsentation überführen muss (encoding), und daraus den ursprünglichen Graphen wieder rekonstruiert (decoding). So kann das Modell lernen, eine relevante Darstellung für die auftretenden Variationen in den historischen Daten zu erzeugen. Nach dem Trainieren können dann die initiale Punktewolken sowie historische Punktewolken in die Repräsentation überführt werden (encoded) und die ähnlichste (mit geringstem Abstand im Repräsentationsraum) ausgewählt werden.

Historische Daten können zum Trainieren des ML-Modells verwendet werden. In den weiteren Schritten können die historischen Daten unberücksichtigt bleiben.

Die Attribute des zu vermessenden Merkmals und der Referenzmerkmale können verglichen werden und von den ähnlichen Referenz-Punktewolken diejenige Referenz-Punktewolke mit den ähnlichsten Attributen ausgewählt werden. Das der ausgewählten Referenz-Punktewolke zugehörige Referenz-Messprogramm kann als das Ziel-Messprogramm bestimmt werden. Die Attribute können beispielsweise mindestens ein Attribut sein ausgewählt aus der Gruppe bestehend aus: Geometrische Soll-Abmessung; Position und Orientierung des Bauteils; Position und Orientierung des Merkmals am Bauteil; Materialeigenschaften; Farbe; Materialart; Rauheit; Glattheit; Glanzgrad bzw. Mattigkeit; Homogenität der Oberfläche; und Porosität der Oberfläche.

In Schritt iii) kann mindestens eine Akzeptanzschwelle verwendet werden. Das Ziel-Mess-programm kann als Messprogramm für einen nachfolgenden Messschritt verwendet werden, wenn die Akzeptanzschwelle eingehalten wird. Andernfalls, wenn die Akzeptanzschwelle nicht eingehalten wird, kann das Zielmessprogramm verworfen werden. Die Akzeptanzschwelle kann mindestens eine Toleranzgrenze hinsichtlich einer Ähnlichkeit der Referenz-Punktewolke und der initialen Punktewolke und/oder der Attribute des zu vermessenden Merkmals und der Referenzmerkmale umfassen.

Nicht in jedem Fall kann das erzeugte Ziel-Messprogramm geeignet sein in einer nachfolgenden Messung verwendet zu werden. Beispielsweise kann das Ziel-Messprogramm des "ähnlichsten" Merkmals verworfen werden, wenn selbst das "ähnlichste" Merkmal noch dem zu vermessenden Merkmal zu unähnlich ist. Beispielsweise kann dies der Fall sein, wenn noch nie ein Loch vermessen wurde, und somit kein geeignetes Loch-Messprogramm vorliegt. In solchen Fällen kann die Akzeptanzschwelle dafür sorgen, dass nur "verlässliche" Vorschläge für das Ziel-Messprogramm angewendet werden. Beispielswiese kann ein Abgleich der Punktewolken-Ähnlichkeit sowie der Attributs-Abgleiche mit mindestens einem Schwellwert erfolgen. Das Verfahren kann ein Ausgeben einer Information über den Vergleich umfassen, beispielsweise einer Information, ob das Ziel-Messprogramm verwendet werden kann oder nicht, insbesondere eine Warnung falls das Ziel-Messprogramm nicht verwendet werden kann. In dem Fall, dass das Ziel-Messprogramm nicht verwendet werden kann, kann ein manuelles Debugging durchgeführt werden.

Das zu vermessende Merkmal kann mindestens einen Teilbereich des Merkmals und/oder des Bauteils umfassen. Das Verfahren kann ein Erzeugen eines Messprogramms für den mindestens einen Teilbereich des Merkmals und/oder des Bauteils umfassen. Die Schritte i) bis iii) können für den mindestens einen Teilbereich des Merkmals und/oder des Bauteils durchgeführt werden. Beispielsweise kann zunächst ein Ziel-Messprogramm für ganzes Bauteil erzeugt werden und anschließend Ziel-Messprogramm(e) für mindestens ein einzelnes Merkmal. Eine große Punktewolke, für beispielsweise einer Autotür, kann bereits einen ersten Vorschlag für ein Gesamt-Ziel-Messprogramm liefern, insbesondere mit Blick auf Kollisionen. Dieses kann dann für die einzelnen Merkmale berücksichtigt werden.

Das Verfahren kann ein Erzeugen eines Messprogramms für Mehrzahl von Merkmalen umfassen. Die Schritte i) bis iii) können für jedes Merkmal durchgeführt werden. Das Verfahren kann ein Zusammenfügen der Ziel-Messprogramme der einzelnen Merkmale umfassen. Beispielsweise können mehrere einzelne Ziel-Messprogramme für eine Mehrzahl von Merkmalen zu einem gesamten Ziel-Messprogramm kombiniert werden. Dieses kann ermöglichen ein Gesamt-Bild inklusive Lage der Aufhängung, der Gesamt-bauteil-Geometrie zu berücksichtigen, bspw. mit Kollision.

Das Verfahren kann ein Berücksichtigen einer Aufgabe-spezifischen Auswahl einer Teilpunktewolke umfassen. Für manche Messaufgaben kann nur ein Teil der Punktewolke verwendet werden. Es kann vorteilhaft sein, für das Erzeugen des Ziel-Messprogramms lediglich einen Teil der gesamten initialen Punktewolke des Merkmals zu betrachten.

In einer Ausführungsform kann das Verfahren zum Erzeugen des Messprogramms die folgenden Schritte aufweisen.

Schritt i) kann die folgenden Schritte aufweisen:
- Erstellen eines "leeren" Messprogramms, beispielsweise eines Computerized Numerical Control (CNC)-Messprogramms. Das leere Messprogramm kann mit einer Messsoftware (Z.B. ZEISS CALIGO, ZEISS INSPECT, ZEISS CALYPSO, ZEISS DMIS Engine, PC-DMIS^{®} von Hexagon^{®}, Metrologic von METROLOGIC^{®}, PolyWorks von InnovMetric Software Inc., sowie jeder am Markt befindlichen Messsoftware welche Optische und taktile Sensorik an einem Verfahrgestell steuern und regeln kann. Die genannten Software Pakete werden hier rein exemplarisch genannt. Auch andere sind möglich. Auch jede weitere Messsoftware, welche nur die Punktewolken auswertet und bei dem das Bauteil am fest installierten Sensor vorbeigeführt wird, kann verwendet werden.) erzeugt werden. In das leere Messprogramm kann das Computermodell, bspw. ein CAD Model mit PMI (Product manufacturing information), des Bauteils oder eines Teils des Bauteils geladen werden.
- Laden der entsprechenden Messpunkte aus dem Computermodel und Verknüpfen dieser manuell oder automatisch zu einem initialen Messprogramm. Der Verfahrweg des Sensors, i.d.R. teilautomatisiert, kann definiert werden. Berücksichtigt werden können hierbei auch notwendige Umfahrwege, welche durch eine notwendige Haltevorrichtung oder Hinderung notwendig sind.

Die Messsoftware kann beispielsweise ZEISS CALIGO, ZEISS INSPECT, ZEISS CALYPSO, ZEISS DMIS Engine, PC-DMIS^{®} von Hexagon^{®}, Metrologic von METROLOGIC^{®}, PolyWorks von InnovMetric Software Inc., oder eine andere Messsoftware sein, welche optische und taktile Sensorik an einem Verfahrgestell steuern und regeln kann. Die genannten Software Pakete werden hier rein exemplarisch genannt. Auch andere sind möglich. Die Messsoftware kann beispielsweise auch dazu eingerichtet sein, die bei der Vermessung aufgenommenen Punktewolken auszuwerten.

Das initiale Messprogramm kann das leere Messprogramm aus dem vorherigen Punkt sein, welches um die Verfahrwegsprogrammierung des Sensors erweitert wird und somit das initiale Messprogramm wird.

Schritt ii) kann die folgenden Schritte aufweisen:
- Automatisiertes Erzeugen einer initialen Punktewolke aus den Designinformationen des aktuellen Merkmals auf dem Bauteil. Die Designinformationen des Merkmals können das Merkmal eindeutig bestimmen. So können ein oder mehrere von Positionierung des Merkmals am Bauteil im kartesischen System, Orientierung des Merkmals am Bauteil im kartesischen System, Merkmalstyp, Sollmaß, tolerierbare Abweichung (Toleranz), Sensorstellung wie Winkelstellung des Sensors zum Merkmal, Sensoreinstellung wie beispielsweise Belichtungseinstellung, Belichtungsdauer, Sensorverfahrgeschwindigkeit, und Sensorabstand zum Merkmal, Linienabstand, und/oder Filter, Punktewolkenausdünnung, Größe des Verarbeitungsfensters, Materialeigenschaften, Materialbearbeitung und weitere, das Material, das Bauteil und das Merkmal bezogene Eigenschaften, welche eine erzeugte Punktewolke beeinflussen können, definiert werden. Beispielsweise kann dieses durch die ZEISS CALIGO-Software (https://www.zeiss.de/messtechnik/produkte/software/caligo.html) erfolgen.

Schritt iii) kann die folgenden Schritte aufweisen:
- Abgleich der initialen Punktewolke mit historischen Daten, wobei der Abgleich die folgenden Schritte umfasst:
   a. Verwenden eines Ähnlichkeitsmaß für Punktewolken, insbesondere einer Metrik, welche für zwei gegebene Punktewolken deren Ähnlichkeit bestimmt (bspw. Earth-Mover-/Wasserstein-Distanz, Chamfer-Distanz, Hausdorff-Distanz, oder ähnliche). Alternativ oder zusätzlich kann ein gelerntes Abstandsmaß, beispielsweise gelernt mittels contrastive learning, verwendet werden
   b. Bestimmen der Ähnlichkeit der initialen Punktewolke zu allen Referenz-Punktewolken der historischen Daten unter dem gewählten Ähnlichkeitsmaß. Die erste Ähnlichkeitsprüfung kann "beispielsweise 10 historische Referenz-Punktewolke" liefern. Eine Merkmals-Ähnlichkeitsprüfung kann dann im Schritt c. erfolgen.
   c. Suchen in den "ähnlichen" historischen Daten nach solchen Merkmalen, die ähnliche Attribute wie das aktuelle Merkmal aufweisen.

Ein Messprogramm des historischen Eintrags, welches ähnlich zur aktuellen Referenz-Punktewolke ist und im Wesentlichen gleiche Attribute aufweist, kann als Ziel-Messprogramm verwendet werden. Insbesondere kann mindestens eine Akzeptanzschwelle verwendet werden. In einem nachfolgenden Messschritt kann das Ziel-Messprogramm verwendet werden. Die in dem Ziel-Messprogramm definierten Einstellungen können automatisch für die Sensoreinstellungen ausgewählt werden. Die Messung kann mit dem Ziel-Messprogramm durchgeführt werden, beispielweise Durchführen der Aufnahme, Bestimmen der Punktewolke, Durchführen der Analyse der aufgenommenen Messwerte.

Die durch die Messung erhaltene Punktewolke kann bewertet werden, sowie das Analyse-Ergebnis. Das Messsystem kann mindestens eine Auswerteeinheit umfassen, welche eingerichtet ist, die von dem Sensor erzeugten Messwerte auszuwerten. Die Auswerteeinheit kann beispielsweise Teil des Prozessors sein. Die Auswerteeinheit kann eingerichtet sein, die mit dem Sensor erzeugte Punktewolke zu bewerten, insbesondere durch einen Abgleich der Abdeckung der Punktwolke mit einem Bild des Merkmals. Als Ergebnis kann die erhaltene Punktewolke zum Beispiel nicht für eine Weiterverarbeitung geeignet und somit für eine Messergebnisberechnung nicht sinnvoll sein. Die erhaltene Punktewolke kann aber auch eine gute Punktewolke sein, welche jedoch in einer falschen Auswerteebene zu einem Messergebnis ausgewertet wird und daher trotz guter Punktewolke ein falsches Ergebnis liefert. Wäre die gute Punktewolke hingegen auf der richtigen Auswerteebene ausgewertet worden, so würde ein gutes Messergebnis resultieren. Um die erhaltene Punktewolke zu bewerten, kann eine manuelle Bewertung durch einen Nutzer oder Operator erfolgen, insbesondere durch Sichtprüfung. Beispielsweise kann auf einer Darstellungsfläche, bspw. einem Bildschirm, einem Fenster mit Holographie-Folie oder ähnlichem, die Punktewolke überlagert zu der Darstellung des Merkmals, bspw. das gerenderte Design, oder eine zusätzlich erstellte Kameraaufnahme, angezeigt werden und einem Nutzer präsentiert werden. Alternativ oder zusätzlich kann die Bewertung automatisch durch ein Computerprogramm erfolgen. Beispielsweise kann eine Auswertung einer Vollständigkeitsüberprüfung der Punktewolke erfolgen, insbesondere eine Bewertung ob die Punkte in der Nähe der Ebenen des Merkmals besetzt sind und ob die Ebenen dicht mit Punkten besetzt sind. Beispielsweise kann eine Ausführung einer Anomalieerkennung auf einer Punktewolke erfolgen, insbesondere ob Punkte an unerwarteten Stellen im Raum sind. Dieses kann bspw. mit einem trainieren ML-Modell erfolgen. Beispielsweise kann ein Ausführen der Bestimmung eines Qualitätsmaßes einer Punktewolke, bspw. Anzahl der Punkte, Entfernung der Punkte zueinander, Menge von Punkten entlang von Objektkanten und Abstand zu Objektkanten, usw., erfolgen. Dieses kann bspw. mit einem trainieren ML-Modell erfolgen.

Das Bewerten kann beispielsweise als Ergebnis haben "Punktewolke ist schlecht", oder "Punktewolke passt, aber Analyse passt nicht", oder "Punktewolke passt und Analyse passt". Alternativ oder zusätzlich kann die Bewertung durch einen Anwender erfolgen. Das Ergebnis der Bewertung und der Analyse können gespeichert werden und als historische Daten bei einer nachfolgenden Durchführung des Verfahrens verwendet werden.

Sollte keine passende historische Information verfügbar sein, so kann das Verfahren abgebrochen werden oder das Ziel-Messprogramm verworfen werden. In dem nachfolgenden Messschritt kann der bisherige "default" verwendet werden. Das Verfahren kann mindestens einen Anzeigeschritt aufweisen. In dem Anzeigeschritt kann dem Anwender mindestens eine Information, beispielsweise mittels einer Anwenderschnittstelle, beispielsweise einem Display, angezeigt werden. Beispielweise kann die Information abgelehnte Punktewolken für ein einzelnes Prüfmerkmal innerhalb eines gesamten Zielmessprogramms mit mehreren Prüfmerkmalen und deren gute Punktewolken umfassen. Im CNC Messprogramm kann dieses automatisch gekennzeichnet werden, um dem Anwender die schlechten Punktewolken gezielt darzustellen, damit diese und/oder das Ziel-Messprogramm manuell abgearbeitet, insbesondere korrigiert, werden können. Beispielsweise können die vom Anwender korrigierten und/oder abgelehnten Punktewolken und/oder Ziel-Messprogramme für ein weiteres Trainieren des ML-Modells verwendet werden. Beispielsweise kann der Anwender manuell das Messprogramm ändern, beispielsweise Änderung der Geschwindigkeit, des Winkels, des Verfahrweges, und weitere. Zu den historischen Daten können die manuell geänderten Ziel-Messprogramme hinzugefügt werden, beispielsweise auch die daraus entstandenen Punktewolken. Das Verfahren kann beispielsweise umfassen, dass, wenn das Ziel-Messprogram schlechte Punktewolken liefert, manuell nachgebessert wird, dann das nachgebesserte Programm durchgeführt wird und eine gute Punktewolke ergibt, und dieses manuell nachgebesserte Programm mit guter Punktewolke den historischen Daten zugefügt wird.

In einer Ausführungsform kann in Schritt iii) mindestens ein mittels maschinellen Lernen trainiertes Modell verwendet werden. Der Begriff "maschinelles Lernen" (ML), wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein Verfahren zur Verwendung künstlicher Intelligenz (KI) für die automatische Modellbildung, insbesondere für die Parameterschätzung von Modellen, beziehen. Das maschinelle Lernen kann ein Entwickeln und Implementieren parametrisierter Funktionen umfassen, welche Eingaben in Ausgaben übersetzen. Das maschinelle Lernen kann ein Entwickeln von Techniken zur Schätzung von Parameterwerten parametrisierter Funktionen aus Daten durch Optimierung von Zielfunktionen (target functions) oder Verlustfunktionen umfassen (loss functions). Der Begriff "Modell", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Funktion mit freien Parametern beziehen, welche eine Zuordnung von Eingaben zu Ausgaben beschreibt.

Der Begriff "trainiertes Modell", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein Modell beziehen, dessen freie Parameter bestimmt wurden.

Das trainierte Modell kann eingerichtet sein zur Vorhersage des Ziel-Messprogramms. Das trainierte Modell kann eine Punktewolke als Eingabe (Input) verwenden und ein Ziel-Mess-programm als Ausgabe (Output) erzeugen. Zusätzlich können auch Informationen über Attribute des Merkmals als Eingabe verwendet werden. Beispielsweise kann als Eingabe eine initiale Punktewolke und Attribute des zu messenden Merkmals verwendet werden und als Ausgabe ein Messprogramm, insbesondere Werte für jede Einstellung im Mess-Parameter-Raum und Auswerte-Parameter-Raum, z.B. als Vektor beschrieben.

Das Modell kann aufgebaut als
- ein Encoder-Part eines Point-Transformer Neural Network für die Punktewolke, welcher die Punktewolke in eine transformierte Repräsentation überführt, beispielsweise wie in "Point Transformer", Zhao et al., ICCV 2021, https://openaccess.thecvf.com/content/ICCV2021/papers/Zhao_Point_Transformer_ICCV_2021_paper.pdf
- dann ein Transformer-Decoder mit cross-attention, der die bereits transformierte Information der Punktewolke mit der Information des Attributsvektors kombiniert
- gefolgt von einem regression-head, der als ein global average pooling über alle bis dahin transformierten Merkmale erfolgen kann, welches dann einem MLP für vector-regression zugeführt wird. Dieses kann einen Output je gesuchtem Messprogrammparameter erzeugen, also bspw. Scanrichtung als Winkel, Beleuchtungsintensität als Scalar, Tiefe der zu berücksichtigenden Punkte als Scalar, usw..
- Die Parameter des Modells können mit den Trainingsdaten trainiert werden durch Minimierung der Vorhersagefehler unter einem L1-Abstandsmaß.

Die genaue Ausgestaltung des Modells kann variiert werden, bspw. Anzahl und Reihenfolge von üblichen Layern wie Normalization, Residual-Connection, Multi-Headed Self-Attentation, Cross-Attention, Multi-Layer-Perceptron, Nicht-Linearitäten, usw.. Insbesondere sind Varianten der Graph Transformer Modelle in "Attending to Graph Transformers", Müller et al., 2023 https://arxiv.org/pdf/2302.04181.pdf beschrieben. Alternative Modelle, welche statt Transformer auf Graph Convolutions setzen, können ebenfalls möglich sein, bspw. wie in Point-GNN: Graph Neural Network for 3D Object Detection in a Point Cloud", Shi and Rajkumar, CVPR 2020 beschrieben.

Das trainierte Modell kann auf mindestens einem Trainingsdatensatz trainiert worden sein. Der Begriff "Trainingsdatensatz", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Datensatz beziehen, welcher zum Parameterschätzung eines Modells, insbesondere zu einem Trainieren des Modells mittels maschinellen Lernens, verwendet wird. Der Trainingsdatensatz kann Trainingsdaten aus manuell korrigierten Durchläufen umfassen. Das trainierte Modell kann durch überwachtes Lernen (engl. Supervised Learning) trainiert sein.

Der Trainingsdatensatz kann eine Mehrzahl von Trainingsdaten umfassen. Der Trainingsdatensatz kann historische Daten umfassen. Der Trainingsdatensatz kann Trainingsdaten aus manuell korrigierten Durchläufen umfassen. Das Verfahren kann mindestens einen Trainingsschritt umfassen, in welchem das Modell trainiert wird. Das maschinelle Lernen kann Vorwissen berücksichtigen, beispielsweise in Form von mindestens einem physikalischen Gesetz und/oder Verhalten mindestens eines Sensors. Der Trainingsschritt kann ein Bestimmen eines trainierten Modells umfassen. Der Trainingsschritt kann ein Bereitstellen eines Trainingsdatensatzes umfassen. Das Bereitstellen kann ein Erstellen des Trainingsdatensatzes umfassen oder ein Abrufen eines Trainingsdatensatzes.

Beispielsweise können die Trainingsdaten Paare aus Punktewolken mit Attributen und dafür erfolgreiche Mess-Einstellungen, wie beispielweise Sensorsettings, Scanrichtung, usw., sein.

Beispielsweise können die Trainingsdaten Paare von Punktewolken und Attributen sowie Messeinstellungen umfassen und ein zugeordnetes Erfolgsmaß, bspw. "gut" oder "schlecht".

Es kann vorteilhaft sein, aus allen Trainingsdaten eine Teilmenge auszuwählen, welche nur von einer Bauteilart stammt.

Das Trainieren des Modells kann mit zwei Eingängen erfolgen, beispielswiese für eine initiale Punktewolke und für Attribute. Die Punktewolke kann als Graph repräsentiert werden, bspw. in dem jeder Punkt ein Knoten wird, und jeder Knoten mit den Knoten aller Punkte verbunden ist, welche näher als 1/10 der Maximallänge des Objekts betragen. Derartige Verfahren zur Punktewolkenanalyse sind bekannt als Point-GNN ("Graph Neural Network for 3D Object Detection in a Point Cloud", Shi and Rajkumar, CVPR 2020, https://openaccess.thecvf.com/content_CVPR_2020/papers/Shi_Point-GNN_Graph_Neural_Network_for_3D_Object_Detection_in_a_CVPR_2020_paper.pdf). Die Attribute können als Vektor repräsentiert werden. Eine geeignete Wahl für das Trainingsverfahren ist dem Durchschnittsfachmann bekannt, bspw. die Wahl der Optimiertechnik (z.B. Gradientenabstieg, stochastischer Gradientenabstieg, mit Momentum, Adam, usw.) sowie Hyperparameter welche die Architektur des ML-Modells (z.B. Anzahl der Schichten) und/oder Einstellung des Trainingsverfahrens (z.B. die Lernrate) definieren.

Der Punktewolken-Encoder kann in einem vorgelagerten Schritt auch selbst-überwacht (eng. self-supervised) vorgelernt werden.

In einer Ausführungsform kann das Verfahren zum Erzeugen des Messprogramms die folgenden Schritte aufweisen.

Schritt i) kann die folgenden Schritte aufweisen:
- Erstellen eines "leeren" Messprogramms, beispielsweise eines Computerized Numerical Control (CNC)-Messprogramms. Das leere Messprogramm kann mit einer Messsoftware erzeugt werden. In das leere Messprogramm kann das Computermodell, bspw. ein CAD Model mit PMI (Product manufacturing information), des Bauteils oder eines Teils des Bauteils geladen werden.
- Laden der entsprechenden Messpunkte aus dem Computermodel und Verknüpfen dieser manuell oder automatisch zu einem initialen Messprogramm. Der Verfahrweg des Sensors, i.d.R. teilautomatisiert, kann definiert werden. Berücksichtigt werden können hierbei auch notwendige Umfahrwege, welche durch eine notwendige Haltevorrichtung oder Hinderung notwendig sind.

Die Messsoftware kann beispielsweise ZEISS CALIGO, ZEISS INSPECT, ZEISS CALYPSO, ZEISS DMIS Engine, PC-DMIS^{®} von Hexagon^{®}, Metrologic von METROLOGIC^{®}, PolyWorks von InnovMetric Software Inc., oder eine andere Messsoftware sein, welche optische und taktile Sensorik an einem Verfahrgestell steuern und regeln kann. Die genannten Software Pakete werden hier rein exemplarisch genannt. Auch andere sind möglich.Die Messsoftware kann beispielsweise eingerichtet sein die Punktewolken auszuwerten und/oder bei welcher das Bauteil am fest installierten Sensor vorbeigeführt wird.

Das initiale Messprogramm kann das leere Messprogramm aus dem vorherigen Punkt sein, welches um die Verfahrwegsprogrammierung des Sensors erweitert wird und somit das initiale Messprogramm wird.

Schritt ii) kann die folgenden Schritte aufweisen:
- Automatisiertes Erzeugen einer initialen Punktewolke aus den Designinformationen des aktuellen Merkmals auf dem Bauteil. Die Designinformationen des Merkmals können das Merkmal eindeutig bestimmen. So können ein oder mehrere von Positionierung des Merkmals am Bauteil im kartesischen System, Orientierung des Merkmals am Bauteil im kartesischen System, Merkmalstyp, Sollmaß, tolerierbare Abweichung (Toleranz), Sensorstellung wie Winkelstellung des Sensors zum Merkmal, Sensoreinstellung wie beispielsweise Belichtungseinstellung, Belichtungsdauer, Sensorverfahrgeschwindigkeit, und Sensorabstand zum Merkmal, Linienabstand, und/oder Filter, Punktewolkenausdünnung, Größe des Verarbeitungsfensters, Materialeigenschaften, Materialbearbeitung und weitere, das Material, das Bauteil und das Merkmal bezogene Eigenschaften, welche eine erzeugte Punktewolke beeinflussen können, definiert werden. Beispielsweise kann dieses durch die ZEISS CALIGO-Software (https://www.zeiss.de/messtechnik/produkte/software/caligo.html) erfolgen.

Schritt iii) kann die folgenden Schritte aufweisen:
- Bereitstellen der initialen Punktewolke mit der Vektordarstellung der Merkmals-Attribute dem ML-Modell als Eingabe und Erzeugen ein Ziel-Messprogramm mit dem ML-Modell.

Beispielsweise kann das ML-Modell eine Mess-Einstellungen vorgeben und/oder vorherzusagen, welche beispielsweise mindestens mehrere, bevorzugt alle Mess-Einstellungen. Aus diesen Mess-Einstellungen kann das Ziel-Messprogramm erzeugt werden.

Die vorhergesagten Mess-Einstellungen können auf Plausibilität überprüft werden. Wenn bspw. eine Scangeschwindigkeit ausgegeben wird, die physikalisch nicht realisierbar ist, sollte diese nicht verwendet werden. In dem Fall könnte entweder die nächstliegende mögliche Einstellung verwendet werden, oder eine Fehlermeldung an den Operator ausgegeben werden. Auch könnten die Werte von einem weiteren Algorithmus, bspw. einen Large-Language-Model überprüft und ggf. verändert werden.

Das vorhergesagte Ziel-Messprogramm kann zur Durchführung einer Vermessung des Merkmals verwendet werden, beispielsweise zum Durchführen der Aufnahme, Bestimmen der Punktewolke, Durchführen der Analyse. Die durch die Messung erhaltene Punktewolke kann bewertet werden, sowie das Analyse-Ergebnis. Das Bewerten kann beispielsweise als Ergebnis haben "Punktewolke ist schlecht", oder "Punktewolke passt, aber Analyse passt nicht", oder "Punktewolke passt und Analyse passt". Das Ergebnis der Bewertung und der Analyse können gespeichert werden und als historische Daten bei einer nachfolgenden Durchführung des Verfahrens oder zum Trainieren des ML-Modells verwendet werden.

Das Verfahren kann mindestens einen Messschritt umfassen, in welchem das Merkmal des Bauteils mit dem Messsystem unter Verwendung des erzeugten Ziel-Messprogramms vermessen wird. Das Verfahren kann ein Bewerten der von dem Messsystem erzeugten Punktewolke und Speichern von Daten zu Messprogramm, Punktewolke und einer Information über die Bewertung umfassen. Das Verfahren kann ein erneutes Trainieren des trainierten Modells umfassen unter Berücksichtigen der gespeicherten Daten.

In Schritt iii) kann, wie oben ausgeführt wurde, mindestens eine Akzeptanzschwelle verwendet werden. Das Ziel-Messprogramm kann als Messprogramm für einen nachfolgenden Messschritt verwendet werden, wenn die Akzeptanzschwelle eingehalten wird. Falls die Akzeptanzschwelle nicht eingehalten wird, kann das Ziel-Messprogramm verworfen werden. Die Akzeptanzschwelle kann eine Toleranzgrenze hinsichtlich einer Unsicherheit der Vorhersage des trainierten Modells umfassen. Das ML-Modell kann mit einer (Un)-Sicherheits-Abschätzung ausgestattet werden, beispielsweise über Dichteschätzung im Eingabebereich, und/oder über Änderung der Ausgabe als Verteilungsschätzer, und/oder über Out-of-distribution-Schätzungen. Auch andere Ausgestaltungen sind denkbar. Diese (Un-)Sicherheit kann mit mindestens einem vorgegebenen Schwellwert verglichen werden. Das Ziel-Mess-programm wird nur ausgeführt, wenn die Ähnlichkeit den Schwellwert überschritten hat. Andernfalls muss der Operator selbst das Debugging manuell durchführen und/oder nur eine Anpassung durchführen und/oder danach die Schritte wiederholen. Beispielsweise kann eine Anpassung durchgeführt werden, wenn dieses möglich ist. Falls es keine Möglichkeit zur Anpassung, insbesondere Verbesserung gibt, dann kann dieses Merkmal aus dem Prüfprogramm entfernt werden.

Das Verfahren, insbesondere Schritte ii) bis iii), können wiederholt durchgeführt werden. Wie oben ausgeführt, kann das Verfahren ein Bewerten der, durch die Vermessung des Merkmals des Bauteils erhaltene, Punktewolke umfassen. Da das Messprogramm bereits automatisiert angepasst ist, kann man davon ausgehen, dass auch die Punktewolke für dieses Merkmal geeignet ist. Falls die Bewertung ergibt, dass das automatisch gefundene Ziel-Messprogramm doch nicht optimal geeignet, z.B. wenn die gefundene Punktewolke in einer falschen Auswerteebene verarbeitet/berechnet wurde, oder wenn das Messergebnis einfach nicht stimmen kann (beispielsweise kann das Bauteil nur 50 mm +-5mm breit sein, aber das Messergebnis besagt 28 mm), kann die durch die Messung erhaltene Information genutzt werden, und ein weiteres Ziel-Messprogramm erzeugt werden. Beispielsweise kann die erhaltene Punktewolke und/oder die erhaltene Information für ein weiteres Trainieren des ML-Modells verwendet werden. Das Verfahren kann insbesondere iterativ ausgeführt werden.

Bei der Erzeugung des weiteren Ziel-Messprogramms werden vorher erzeugte Ziel-Messprogramme berücksichtigt. Beispielsweise kann in einer Datenbank nach historischen Messprogrammen gesucht werden und diese berücksichtigt werden. Beispielsweise soll das Merkmal des weiteren Ziel-Messprogramms zwar ähnlich zum zu vermessenden Merkmal sein, aber unähnlich zu dem zuletzt ausgewählten Merkmal, welches angesichts der Bewertung nicht geeignet war. Insbesondere kann eine Abweichung der erhaltenen Punktewolke zu der initialen Punktewolke als Eingangspunkt genommen werden. Die Auswahl der nächsten "ähnlichsten" Punktewolke und des zugehörigen Merkmals und zugehörigem Messprogramms aus den historischen Daten kann nicht nur auf Basis der Punktewolken-Ähnlichkeit erfolgen, sondern es kann zudem sichergestellt sein, dass die nächste Punktewolke / das nächste Merkmal eben auch deutlich anders als die bisher ausgewählte Punktewolke ist. Sonst wäre die Wahrscheinlichkeit sehr hoch, dass der nächste Vorschlag auch wieder schlecht wird.

Die historischen Daten können für gegebene Messmerkmale zugehörige gute Messprogramme enthalten. Die historischen Daten können auch Messprogramme umfassen, die nicht erfolgreich waren, also beispielsweise welche, die nicht zu einer geeigneten Punktewolke führten oder diese nicht geeignet ausgewertet haben. Auch diese "schlechten Erfahrungen" können berücksichtigt werden. Beispielsweise kann das ML-Modell auch so trainiert werden, dass nicht nur die Ausgaben für ein "gutes" Beispiel möglichst ähnlich zum zugehörigen Messprogramm sind, sondern zusätzlich auch die Ausgaben für ein "schlechtes" Beispiel möglichst unähnlich zum zugehörigen Messprogramm sind. Damit kann das Trainieren des Modells schneller und robuster möglich sein, da es nicht nur lernt, was gut funktioniert, sondern auch, was nicht gut funktioniert. Beispielsweise kann, wenn der Anwender eine Einstellung selber vornimmt, die sehr ähnlich zu einer bekannten, schlechten Einstellung ist, eine Warnung ausgegeben werden.

In einem weiteren Aspekt wird ein Verfahren zur Vermessung mindestens eines Merkmals eines Bauteils mit einem, eine Punktewolke erzeugendem, Messsystem vorgeschlagen. Das Verfahren kann die folgenden Schritte umfassen:
iv) Erzeugen eines Messprogramms unter Verwendung eines erfindungsgemäßen Verfahrens zum Erzeugen eines Messprogramms, insbesondere nach einer oben oder weiter unten beschriebenen Ausführungsform;
v) Durchführen einer Vermessung des Merkmals eines Bauteils mit einem, eine Punktewolke erzeugendem, Messsystem unter Verwendung des erzeugten Messprogramms.

Die Verfahrensschritte können in der angegebenen Reihenfolge durchgeführt werden, wobei einer oder mehrere der Schritte zumindest teilweise auch gleichzeitig durchgeführt werden können und wobei einer oder mehrere der Schritte mehrfach wiederholt werden können. Darüber hinaus können weitere Schritte unabhängig davon, ob sie hier erwähnt werden oder nicht, zusätzlich ausgeführt werden. Für Einzelheiten in Bezug auf Definitionen und Ausführungsformen des Verfahrens zur Vermessung wird auf die Beschreibung des erfindungsgemäßen Verfahrens zum Erzeugen eines Messprogramms verwiesen.

Nach dem Ausführen des Ziel-Messprogramms können die erfassten Punktewolken mit den Referenzpunktewolken verglichen werden. Alle Merkmale, bei denen die Punktewolken übereinstimmen, können als "ok" vermerkt werden, die restlichen können noch mal behandelt werden. Unter "übereinstimmen" kann identisch als auch ähnlich verstanden werden, beispielsweise unter Verwendung eines Ähnlichkeitsmaßes wie weiter oben beschrieben. Dieser Schritt kann ermöglichen, die vorgeschlagene Punktewolke aus dem ML System zu bestätigen, und die restlichen Punktewolken, welche ein schlechtes Ergebnis geliefert haben, können z.B. manuell oder mit einem weiteren automatisierten Vorschlag bearbeitet werden, solange, bis eine gute Punktewolke entsteht, die wiederum dem ML System eingespeist werden kann.

Beispielsweise kann die Punktewolke ein Polygonnetz sein und/oder umfassen. Beispielsweise kann aus Xray-Projektions-Aufnahmen, beispielsweise eines Xray-Scanners, das Polygonnetz erzeugt werden durch 3D-Volumenrekonstruktion. Aus rekonstruierten Volumen können Oberflächen per Marching Cubes Algorithmen gefunden werden. Deren Lage kann, insbesondere Subpixelgenau, verfeinert werden durch suchen entlang eines Grauwertgradienten. Das gibt ein Polygonnetz. Für die Xray-Projektions-Aufnahmen kann ein Objekt in den Strahlengang zwischen Xray-Röhre und Xray-Detektor des Xray-Scanners gestellt werden, aufgenommen, und gedreht werden. Dieses kann iterativ wiederholt werden. Einstellungen für das Messprogramm bei einem Xray-Scanner können Vergrößerungsmaßstab und Scanparameter wie Lichtstärke, Aufnahmedauer, Drehwinkel, Drehgeschwindigkeit, usw. sein. Wenn diese bestimmt sind, dann sind für weitere Messungen keine signifikanten Änderungen zu erwarten.

In einem weiteren Aspekt wird ein Messsystem vorgeschlagen. Das Messsystem ist eingerichtet mindestens eine Punktewolke zu erzeugen. Beispielsweise kann das Messsystem ein Koordinatenmessgerät sein oder umfassen. Das Messsystem ist eingerichtet, ein erfindungsgemäßes Verfahren zur Vermessung mindestens eines Merkmals eines Bauteils durchzuführen. Das Messsystem umfasst mindestens einen Sensor. Das Messsystem umfasst mindestens eine Steuerung, welche eingerichtet ist den Sensor zur Durchführung des Ziel-Messprogramms zu steuern.

Das Messsystem kann mindestens eine Auswerteeinheit umfassen, welche eingerichtet ist, die von dem Sensor erzeugten Messwerte auszuwerten.

Für Einzelheiten in Bezug auf Definitionen und Ausführungsformen des Messsystems wird auf die Beschreibung der erfindungsgemäßen Verfahren verwiesen.

Ferner wird im Rahmen der vorliegenden Erfindung ein Computerprogramm vorgeschlagen, das bei Ablauf auf einem Computer oder Computer-Netzwerk ein erfindungsgemäßes Verfahren zum Erzeugen eines Messprogramms in einer seiner Ausgestaltungen, insbesondere die Verfahrensschritte i) bis iii), und/oder ein erfindungsgemäßes Verfahren zur Vermessung mindestens eines Merkmals eines Bauteils in einer seiner Ausgestaltungen ausführt.

Weiterhin wird im Rahmen der vorliegenden Erfindung ein Computerprogramm mit Programmcode-Mitteln vorgeschlagen, um ein erfindungsgemäßes Verfahren zum Erzeugen eines Messprogramms in einer seiner Ausgestaltungen, insbesondere die Verfahrensschritte i) bis iii), und/oder ein erfindungsgemäßes Verfahren zur Vermessung mindestens eines Merkmals eines Bauteils in einer seiner Ausgestaltungen durchzuführen, wenn das Programm auf einem Computer oder Computer-Netzwerk ausgeführt wird. Insbesondere können die Programmcode-Mittel auf einem computerlesbaren Datenträger und/oder einem computerlesbaren Speichermedium gespeichert sein.

Der Begriffe "computerlesbarer Datenträger" und "computerlesbares Speichermedium", wie sie hier verwendet werden, können sich insbesondere auf nicht-transitorische Datenspeicher beziehen, beispielsweise ein Hardware-Datenspeichermedium, auf welchem computer-ausführbare Instruktionen gespeichert sind. Der computerlesbare Datenträger oder das computerlesbare Speichermedium können insbesondere ein Speichermedium wie ein Random-Access Memory (RAM) und/oder ein Read-Only Memory (ROM) sein oder umfassen.

Außerdem wird im Rahmen der vorliegenden Erfindung ein Datenträger vorgeschlagen, auf dem eine Datenstruktur gespeichert ist, die nach einem Laden in einen Arbeits- und/oder Hauptspeicher eines Computers oder Computer-Netzwerkes ein erfindungsgemäßes Verfahren zum Erzeugen eines Messprogramms in einer seiner Ausgestaltungen, insbesondere die Verfahrensschritte i) bis iii), und/oder ein erfindungsgemäßes Verfahren zur Vermessung mindestens eines Merkmals eines Bauteils in einer seiner Ausgestaltungen ausführen kann.

Weiterhin wird im Rahmen der vorliegenden Erfindung ein nicht-transientes computerlesbares Medium vorgeschlagen, umfassend Instruktionen, die, wenn sie von einem oder mehreren Prozessoren ausgeführt werden, den einen oder die mehreren Prozessoren dazu veranlassen, ein erfindungsgemäßes Verfahren zum Erzeugen eines Messprogramms in einer seiner Ausgestaltungen, insbesondere die Verfahrensschritte i) bis iii), und/oder ein erfindungsgemäßes Verfahren zur Vermessung mindestens eines Merkmals eines Bauteils in einer seiner Ausgestaltungen auszuführen

Auch wird im Rahmen der vorliegenden Erfindung ein Computerprogramm-Produkt mit auf einem maschinenlesbaren Träger gespeicherten Programmcode-Mitteln vorgeschlagen, um ein erfindungsgemäßes Verfahren zum Erzeugen eines Messprogramms in einer seiner Ausgestaltungen, insbesondere die Verfahrensschritte i) bis iii), und/oder ein erfindungsgemäßes Verfahren zur Vermessung mindestens eines Merkmals eines Bauteils in einer seiner Ausgestaltungen durchzuführen, wenn das Programm auf einem Computer oder Computer-Netzwerk ausgeführt wird.

Dabei wird unter einem Computer-Programmprodukt das Programm als handelbares Produkt verstanden. Es kann grundsätzlich in beliebiger Form vorliegen, so zum Beispiel auf Papier oder einem computerlesbaren Datenträger und kann insbesondere über ein Datenübertragungsnetz verteilt werden.

Schließlich wird im Rahmen der vorliegenden Erfindung ein moduliertes Datensignal vorgeschlagen, welches von einem Computersystem oder Computernetzwerk ausführbare Instruktionen zum Ausführen eines Verfahrens nach einer der beschriebenen Ausführungsformen enthält.

Im Hinblick auf die computer-implementierten Aspekte der Erfindung können einer, mehrere oder sogar alle Verfahrensschritte der Verfahren gemäß einer oder mehreren der hier vorgeschlagenen Ausgestaltungen mittels eines Computers oder Computer-Netzwerks durchgeführt werden. Somit können, allgemein, jegliche der Verfahrensschritte, einschließlich der Bereitstellung und/oder Manipulation von Daten mittels eines Computers oder Computer-Netzwerks durchgeführt werden. Allgemein können diese Schritte jegliche der Verfahrensschritte umfassen, ausgenommen der Schritte, welche manuelle Arbeit erfordern, beispielsweise das Bereitstellen von Proben und/oder bestimmte Aspekte der Durchführung tatsächlicher Messungen.

Zusammenfassend werden, ohne Beschränkung weiterer möglicher Ausgestaltungen, folgende Ausführungsformen vorgeschlagen:
Ausführungsform 1: Computer-implementiertes Verfahren zum Erzeugen eines Mess-programms für eine Vermessung mindestens eines Merkmals eines Bauteils mit einem, eine Punktewolke erzeugendem, Messsystem, wobei das Verfahren die folgenden Schritte umfasst:
   i) Bereitstellen eines Computermodells des Bauteils und eines initialen Messprogramms zur Vermessung des Merkmals des Bauteils mit dem Messsystem;
   ii) Erzeugen einer initialen Punktewolke des Merkmals durch Simulieren der Vermessung des Merkmals des Bauteils unter Berücksichtigung des initialen Messprogramms mit dem Messsystem;
   iii) Bestimmen, unter Verwendung mindestens eines Prozessors, eines Ziel-Mess-programms durch Evaluieren der initialen Punktewolke unter Verwendung von historischen Daten, wobei die historischen Daten Referenz-Punktewolken von Referenzmerkmalen und zugehörigen Referenz-Messprogrammen umfassen.
Ausführungsform 2: Verfahren nach der vorhergehenden Ausführungsform, wobei das Messsystem mindestens einen Sensor umfasst ausgewählt aus der Gruppe bestehend aus: einem optischen Sensor; einem taktilen Sensor, einem Temperatursensor, einem Röntgensensor.
Ausführungsform 3: Verfahren nach einer der vorhergehenden Ausführungsformen, wobei das Messprogramm Informationen über mindestens eine Einstellung umfasst ausgewählt aus der Gruppe bestehend aus: Sensoreinstellung, insbesondere Beleuchtungsintensität, Beleuchtungsdauer, Aufnahmedauer, Empfindlichkeit, Blendenöffnung, Sensorstellung zum Bauteil, insbesondere Abstand und/oder Winkel zum Bauteil, Information über Start- und Endpunkt, Information über Verfahrweg, Information über Geschwindigkeit, Information über Beschleunigung, Information über. zum Verfahren entlang des Verfahrwegs.
Ausführungsform 4: Verfahren nach einer der vorhergehenden Ausführungsformen, wobei das zu vermessende Merkmal mindestens einen Teilbereich des Merkmals und/oder des Bauteils umfasst, wobei das Verfahren ein Erzeugen eines Messprogramms für den mindestens einen Teilbereich des Merkmals und/oder des Bauteils umfasst, wobei die Schritte i) bis iii) für den mindestens einen Teilbereich des Merkmals und/oder des Bauteils durchgeführt werden, und/oder wobei das Verfahren ein Erzeugen eines Mess-programms für Mehrzahl von Merkmalen umfasst, wobei die Schritte i) bis iii) für jedes Merkmal durchgeführt werden, wobei das Verfahren ein Zusammenfügen der Ziel-Messprogramme der einzelnen Merkmale umfasst.
Ausführungsform 5: Verfahren nach einer der vorhergehenden Ausführungsformen, wobei in Schritt iii) die initiale Punktewolke verwendet wird und/oder eine von dieser abgeleitete Information verwendet wird.
Ausführungsform 6: Verfahren nach einer der vorhergehenden Ausführungsformen, wobei die historischen Daten Referenz-Punktewolken von Referenzmerkmalen mit, innerhalb von Toleranzen, gleichen Attributen wie das zu vermessende Merkmal und Informationen zu den Attributen der Referenzmerkmale umfassen,
   wobei Schritt iii) einen Vergleich der initialen Punktewolke und den historischen Referenz-Punktewolken umfasst, wobei der initialen Punktewolke ähnliche Referenz-Punktewolken unter Berücksichtigung mindestens eines Ähnlichkeitsmaßes bestimmt werden, wobei die Attribute des zu vermessenden Merkmals und der Referenzmerkmale verglichen werden und von den ähnlichen Referenz-Punktewolken diejenige Referenz-Punktewolke mit den ähnlichsten Attributen ausgewählt wird, wobei das der ausgewählten Referenz-Punktewolke zugehörige Referenz-Messprogramm als das Ziel-Messprogramm bestimmt wird.
Ausführungsform 7: Verfahren nach der vorhergehenden Ausführungsform, wobei als Ähnlichkeitsmaß mindestens eine Metrik verwendet wird, welche für zwei gegebene Punktewolken deren Ähnlichkeit bestimmt, wobei die Metrik ausgewählt ist aus der Gruppe bestehend aus: einer Earth-Mover-/Wasserstein-Distanz; einer Chamfer-Distanz; einer Hausdorff-Distanz, ein auf Basis von historischen Daten gelerntes Ähnlichkeitsmaß.
Ausführungsform 8: Verfahren nach einer der zwei vorhergehenden Ausführungsformen, wobei die Attribute mindestens eine Eigenschaft des Merkmals umfasst ausgewählt aus der Gruppe bestehend aus: Geometrische Soll-Abmessung; Position und Orientierung des Bauteils; Position und Orientierung des Merkmals am Bauteil; Materialeigenschaften; Farbe; Materialart; Rauheit; Glattheit; Glanzgrad bzw. Mattigkeit; Homogenität der Oberfläche; und Porosität der Oberfläche.
Ausführungsform 9: Verfahren nach einer der drei vorhergehenden Ausführungsformen, wobei in Schritt iii) mindestens eine Akzeptanzschwelle verwendet wird, wobei das Ziel-Messprogramm als Messprogramm für einen nachfolgenden Messschritt verwendet wird, wenn die Akzeptanzschwelle eingehalten wird, und andernfalls verworfen wird, wobei die Akzeptanzschwelle mindestens eine Toleranzgrenze hinsichtlich einer Ähnlichkeit der Referenz-Punktewolke und der initialen Punktewolke und/oder der Attribute des zu vermessenden Merkmals und der Referenzmerkmale umfasst.
Ausführungsform 10: Verfahren nach einer der vorhergehenden Ausführungsformen, wobei in Schritt iii) mindestens ein mittels maschinellen Lernen trainiertes Model verwendet wird, wobei das trainierte Model eingerichtet ist zur Vorhersage des Ziel-Mess-programms, wobei die initiale Punktewolke und Informationen über Attribute des Merkmals als Eingang für das trainierte Modell verwendet werden, wobei das trainierte Modell auf mindestens einem Trainingsdatensatz trainiert wurde, wobei der Trainingsdatensatz die historischen Daten umfasst.
Ausführungsform 11: Verfahren nach der vorhergehenden Ausführungsform, wobei das Verfahren mindestens einen Messschritt umfasst, in welchem das Merkmal des Bauteils mit dem Messsystem unter Verwendung des erzeugten Ziel-Messprogramms vermessen wird, wobei das Verfahren ein Bewerten der von dem Messsystem erzeugten Punktewolke und ein Speichern von Daten zu Messprogramm, Punktewolke und einer Information über die Bewertung umfasst, wobei das Verfahren ein erneutes Trainieren des trainierten Modells umfasst unter Berücksichtigen der gespeicherten Daten.
Ausführungsform 12: Verfahren nach einer der zwei vorhergehenden Ausführungsformen, wobei in Schritt iii) mindestens eine Akzeptanzschwelle verwendet wird, wobei das Ziel-Messprogramm als Messprogramm für einen nachfolgenden Messschritt verwendet wird, wenn die Akzeptanzschwelle eingehalten wird, und andernfalls verworfen wird, wobei die Akzeptanzschwelle eine Toleranzgrenze hinsichtlich einer Unsicherheit der Vorhersage des trainierten Modells umfasst.
Ausführungsform 13: Verfahren zur Vermessung mindestens eines Merkmals eines Bauteils mit einem, eine Punktewolke erzeugendem, Messsystem, wobei das Verfahren die folgenden Schritte umfasst:
   iv) Erzeugen eines Messprogramms unter Verwendung eines Verfahrens zum Erzeugen eines Messprogramms nach einer der vorhergehenden Ausführungsformen;
   v) Durchführen einer Vermessung des Merkmals eines Bauteils mit einem, eine Punktewolke erzeugendem, Messsystem unter Verwendung des erzeugten Messprogramms.
Ausführungsform 14: Ein Messsystem, wobei das Messsystem eingerichtet ist, ein Verfahren zur Vermessung nach der vorhergehenden Ausführungsform durchzuführen, wobei das Messsystem mindestens einen Sensor umfasst, wobei das Messsystem mindestens eine Steuerung umfasst, welche eingerichtet ist, den Sensor zur Durchführung des Ziel-Messprogramms zu steuern.
Ausführungsform 15: Computerprogramm, welches bei Ablauf auf einem Computer oder Computernetzwerk, insbesondere eines Messsystems nach der vorhergehenden Ausführungsform, ein Verfahren zum Erzeugen eines Messprogramms für eine Vermessung mindestens eines Merkmals eines Bauteils mit einem, eine Punktewolke erzeugendem, Messsystem nach einer der vorhergehenden, ein Verfahren zum Erzeugen eines Mess-programms betreffenden, Ausführungsformen, insbesondere die Verfahrensschritte i) bis iii), und/oder ein Verfahren zur Vermessung mindestens eines Merkmals eines Bauteils nach Ausführungsform 13 ausführt.
Ausführungsform 16: Computerprogramm-Produkt mit auf einem maschinenlesbaren Träger gespeicherten Programmcode-Mitteln, um ein Verfahren um Erzeugen eines Messprogramms für eine Vermessung mindestens eines Merkmals eines Bauteils mit einem, eine Punktewolke erzeugendem, Messsystem nach einer der vorhergehenden, ein Verfahren zum Erzeugen eines Messprogramms betreffenden, Ausführungsformen und/oder ein Verfahren zur Vermessung mindestens eines Merkmals eines Bauteils nach Ausführungsform 13, durchzuführen, wenn das Programm auf einem Computer oder Computer-Netzwerk, insbesondere eines Messsystems nach Ausführungsform 14, ausgeführt wird.

### Kurze Beschreibung der Figuren

Weitere Einzelheiten und Merkmale ergeben sich aus der nachfolgenden Beschreibung von Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.

Im Einzelnen zeigen:
- Figur 1: ein Ausführungsbeispiel eines erfindungsgemäßen Verfahrens zum Erzeugen eines Messprogramms für eine Vermessung mindestens eines Merkmals eines Bauteils mit einem, eine Punktewolke erzeugendem, Messsystem und eines Verfahrens zur Vermessung des Merkmals mit dem Messsystem;
- Figur 2: ein Ausführungsbeispiel eines erfindungsgemäßen Messsystems;
- Figur 3A: eine schematische Darstellung einer an einem Blech angeschweißten Schweißmutter (ohne dargestellte Schweißnaht);
- Figur 3B: eine schematische Darstellung eines Messvorgangs zur Gewinnung von Punktewolken des Bauteils der Figur 3A;
- Figuren 3C bis 3E: schematische Darstellungen unterschiedlicher Auswertefehler bei der Vermessung des Bauteils der Figur 3A gemäß Figur 3B, welche durch die vorliegende Erfindung automatisiert vermieden werden können.

### Beschreibung der Ausführungsbeispiele

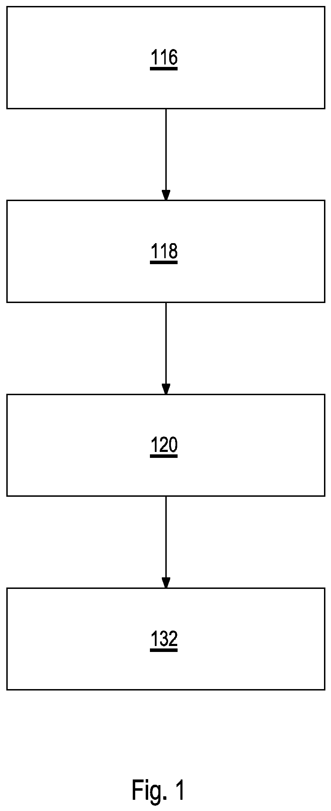

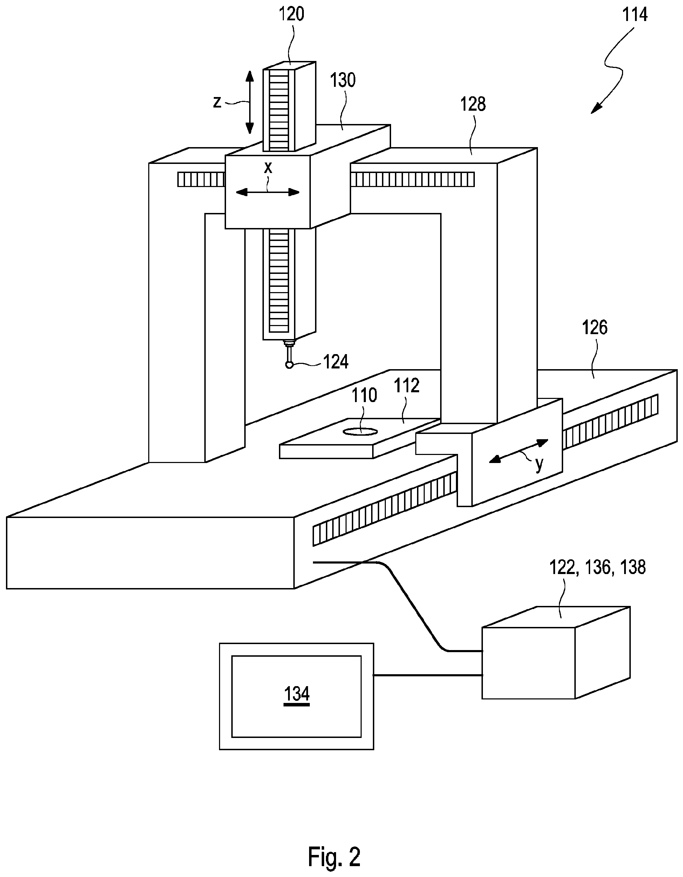

Figur 1 zeigt ein Flussdiagram eines Ausführungsbeispiels eines erfindungsgemäßen computerimplementierten Verfahrens zum Erzeugen eines Messprogramms für eine Vermessung mindestens eines Merkmals 110 eines Bauteils 112 mit einem, eine Punktewolke erzeugenden, Messsystem 114 und eines Verfahrens zur Vermessung des Merkmals 110 mit dem Messsystem 114. Ein Ausführungsbeispiel des Messsystems 114 ist in Figur 2 gezeigt. Das Verfahren kann mindestens einen Computer und/oder mindestens ein Computer-Netzwerk involvieren. Der Computer und/oder das Computer-Netzwerk können mindestens einen Prozessor umfassen, wobei der Prozessor dazu eingerichtet ist, mindestens einen Verfahrensschritt des Verfahrens der Erfindung durchzuführen. Bevorzugt wird jeder der Verfahrensschritte jeweils von dem Computer und/oder dem Computer-Netzwerk durchgeführt. Das Verfahren kann vollständig automatisch und im Speziellen ohne Benutzerinteraktion durchgeführt werden.

Das Verfahren umfasst die folgenden Schritte:
i) (116) Bereitstellen eines Computermodells des Bauteils 112 und eines initialen Messprogramms zur Vermessung des Merkmals 110 des Bauteils 112 mit dem Messsystem 114;
ii) (118) Erzeugen einer initialen Punktewolke des Merkmals 110 durch Simulieren der Vermessung des Merkmals 110 des Bauteils 112 unter Berücksichtigung des initialen Messprogramms mit dem Messsystem 114;
iii) (120) Bestimmen, unter Verwendung mindestens eines Prozessors 122, eines Ziel-Messprogramms durch Evaluieren der initialen Punktewolke unter Verwendung von historischen Daten, wobei die historischen Daten Referenz-Punktewolken von Referenzmerkmalen und zugehörigen Referenz-Messprogrammen umfassen.

Die Verfahrensschritte können in der angegebenen Reihenfolge durchgeführt werden, wobei einer oder mehrere der Schritte zumindest teilweise auch gleichzeitig durchgeführt werden können und wobei einer oder mehrere der Schritte mehrfach wiederholt werden können. Darüber hinaus können weitere Schritte unabhängig davon, ob sie hier erwähnt werden oder nicht, zusätzlich ausgeführt werden.

Das Bauteil 112 kann ein beliebiges Objekt sein, beispielsweise ein Kraftfahrzeug oder ein Teil eines Kraftfahrzeugs. Auch andere Bauteile 112 sind jedoch denkbar. Das Merkmal 110 kann ein Teil und/oder Element eines gesamten Bauteiles 112 oder das Bauteil 112 selbst sein. Das Bauteil 112 kann ein Merkmal 110 oder eine Mehrzahl von Merkmalen 110 aufweisen. Das Merkmal 110 kann beispielsweise auf einer Fläche ein Flächenpunkt sein. Das Merkmal 110 kann beispielsweise ein Bolzen sein. Das Merkmal 110 kann beispielsweise eine Bohrung sein. Das Merkmal 110 kann beispielsweise ein zylinderförmiges Objekt sein.

Das Merkmal 110 kann beispielsweise eine Mutter sein. Das Merkmal 110 kann beispielsweise eine Kante sein. Das Merkmal 110 kann ein zu vermessendes Merkmal sein.

Die Vermessung kann mindestens eine quantitative Messung und/oder mindestens ein qualitatives Prüfen und/oder Inspizieren des Merkmals 110 umfassen. Auch eine Kombination aus qualitativer und quantitativer Vermessung ist denkbar, beispielsweise wenn mehrere Sensoren von dem Messsystem umfasst sind. Die Vermessung kann beispielsweise mittels mindestens einem mechanischen Messprinzip und/oder mindestens einem optischen Messprinzip erfolgen. Eine qualitative Vermessung kann beispielsweise dahingehend erfolgen, dass ein Attribut des Merkmals 110 erfasst und/oder bestimmt wird. Ein Ergebnis einer qualitativen Vermessung kann mindestens eine Attributaussage sein, beispielsweise "gut" oder "schlecht" oder "nass" oder "trocken". Eine quantitative Vermessung kann beispielsweise dahingehend erfolgen, dass das Messsystem 114, insbesondere mindestens ein Sensor, mindestens eine erfassbare Messgröße generiert, beispielsweise mindestens ein Messsignal. Beispielsweise kann ein quantitatives Attribut eine Längenabweichung des Merkmals sein, wie beispielsweise eine Ausdehnung in mm.

Beispielsweise kann ein Attribut des Merkmals 110 eine physikalische und/oder geometrische Eigenschaft des Merkmals 110 sein. Beispielsweise kann das Attribut eine physikalische Eigenschaft des Merkmals sein. Beispielsweise kann die physikalische Eigenschaft mindestens eine Eigenschaft sein ausgewählt aus der Gruppe bestehend aus: Materialart, Materialeigenschaften, Rauheit, Glattheit, Pose des Merkmals am Bauteil, Farbe. Beispielsweise kann das Attribut eine geometrische Eigenschaft des Merkmals sein. Beispielsweise kann die geometrische Eigenschaft mindestens eine Eigenschaft sein ausgewählt aus der Gruppe bestehend aus: Solldurchmesser, Abweichung gegenüber einem Solldurchmesser, Toleranz der Abweichung, Zylindrizität, Parallelität, Symmetrie.

Das Messsystem 114, wie beispielsweise in Figur 2 gezeigt, kann zur Vermessung des mindestens einen Merkmals 110 geeignet sein. In Figur 2 ist das Messsystem 114 beispielhaft als Koordinatenmessgerät ausgestaltet. Auch andere Ausführungsformen sind jedoch denkbar. Das Messsystem 114 kann mindestens einen Sensor 124 umfassen ausgewählt aus der Gruppe bestehend aus: einem optischen Sensor; einem taktilen Sensor, einem Temperatursensor, insbesondere zur Infrarotmessung, einem Röntgensensor mit Röntgenquelle.

Beispielsweise kann das Koordinatenmessgerät ein Portalmessgerät oder ein Brückenmessgerät sein. Das Koordinatenmessgerät kann einen Messtisch 126 zur Auflage des Bauteils 112 aufweisen. Das Koordinatenmessgerät kann ein luftgelagertes Koordinatenmessgerät oder ein Wälzgelagertes Koordinatenmessgerät sein. Das Koordinatenmessgerät beispielsweise kann mindestens ein Portal 128 aufweisen, welches mindestens eine erste vertikale Säule, mindestens eine zweite vertikale Säule und eine die erste vertikale Säule und die zweite vertikale Säule verbindende Traverse aufweist. Mindestens eine vertikale Säule ausgewählt aus der ersten und zweiten vertikalen Säule kann auf dem Messtisch 126 beweglich gelagert sein. Die horizontale Richtung kann eine Richtung entlang einer x-Achse sein. Das Koordinatenmessgerät kann ein Koordinatensystem, beispielsweise ein kartesisches Koordinatensystem oder ein Kugelkoordinatensystem, aufweisen. Auch andere Koordinatensysteme sind denkbar. Ein Ursprung oder Nullpunkt des Koordinatensystems kann beispielsweise durch einen Sensor des Koordinatenmessgeräts, insbesondere einem Sensor, beispielsweise einem taktilen Sensor, gegeben sein. Eine y-Achse kann senkrecht zur x-Achse, in einer Ebene der Auflagefläche des Messtischs verlaufen. Senkrecht zu der Ebene der Auflagefläche, in eine vertikale Richtung, kann sich eine z-Achse, auch longitudinale Achse genannt, erstrecken. Die vertikalen Säulen können sich entlang der z-Achse erstrecken. Die Traverse kann sich entlang der x-Achse erstrecken. Das Koordinatenmessgerät kann mindestens einen Messschlitten aufweisen, welcher entlang der Traverse beweglich gelagert ist. Der Messschlitten kann direkt oder mittels weiterer Bauteile mindestens eine Sensorvorrichtung, auch als Sensor bezeichnet, aufnehmen. In dem Messschlitten kann eine in eine vertikale Richtung, beispielsweise entlang der z-Achse, bewegliche Pinole 130 gelagert sein. An einem unteren Ende, insbesondere einem in Richtung Auflagefläche zeigenden Ende, der Pinole 130 kann beispielsweise mindestens ein Sensor 124 angeordnet sein. Der Sensor 124 kann taktil und/oder berührungslos an eine Oberfläche des Bauteils mittels eines mechanischen und/oder optischen Messsystems antasten.

Auch andere Ausgestaltungen des Koordinatenmessgeräts sind denkbar. Beispielsweise kann das Koordinatenmessgerät als ein Horizontalarm-Koordinatenmessgeräte ausgestaltet sein, beispielsweise als ein Multisensor-Horizontal-Arm Messgerät. Beispielsweise kann das Koordinatenmessgerät mindestens einen Roboter umfassen. Beispielsweise kann das Koordinatenmessgerät mit Röntgentomografie (CT) ausgestaltet sein. Das Koordinatenmessgerät kann mindestens einen Röntgensensor, beispielsweise mindestens ein Xray-Detektor, mit Röntgenquelle, beispielsweise mindestens eine Xray-Röhre, aufweisen, insbesondere mindestens einen Xray-Scanner. Für die Xray-Projektions-Aufnahmen kann ein Objekt in den Strahlengang zwischen Xray-Röhre und Xray-Detektor des Xray-Scanners gestellt, aufgenommen, und gedreht werden.

Das Messsystem ist eingerichtet mindestens eine Punktewolke zu erzeugen. Die Punktewolke kann eine Menge von Punkten eines Vektorraums umfassen. Die Punktwolke kann durch die enthaltenen Punkte definiert sein. Die Punktewolke kann die Menge, der mit dem Messsystem 114 aufgenommenen, Messwerte umfassen und deren Phasenraumkoordinate, insbesondere deren Raumkoordinaten. Die Punktewolke kann eine Menge von vorhergesagten Punkten umfassen, welche durch Simulieren der Vermessung des Merkmals des Bauteils mit dem Messsystem 114 vorhergesagt werden. Jeder der Punkte der Punktewolke kann einen mit dem Messsystem 114 erzeugten oder vorhergesagten Messwert entsprechen. Eine Position der Punkte in der Punktewolke kann durch den Messwert und die jeweilige Phasenraumkoordinate bestimmt sein, insbesondere durch ihre Raumkoordinaten.

Das Messprogramm kann eine Spezifizierung mindestens einer Vermessung des Merkmals 110 umfassen. Das Messprogramm kann eine Mehrzahl von Elementen aufweisen, wie beispielsweise mindestens eine Messspezifikation, mindestens eine Messanweisung, und/oder mindestens ein Messablaufplan. Die Messspezifikation kann das zu vermessende Merkmal festlegen. Die Messanweisung kann mindestens eine Anweisung für die Durchführung der Vermessung umfassen. Der Messablaufplan kann eine Abfolge der Vermessung definieren. Das Messprogramm kann Informationen über mindestens eine Einstellung umfassen ausgewählt aus der Gruppe bestehend aus: Sensoreinstellung, insbesondere Beleuchtungsintensität, Beleuchtungsdauer, Aufnahmedauer, Empfindlichkeit, Blendenöffnung, Sensorstellung zum Bauteil, insbesondere Abstand und/oder Winkel zum Bauteil, Information über Start- und Endpunkt, Information über Verfahrweg, Information über Geschwindigkeit, Information über Beschleunigung, Information zum Verfahren entlang des Verfahrwegs. Das Erzeugen des Messprogramms kann ein Erstellen und/oder ein Anpassen und/oder Optimieren eines Messprogramms umfassen. Das Erzeugen des Messprogramms kann ein Bestimmen eines Messprogramms, welches das Merkmal 110 für die jeweilige Messaufgabe bestmöglich abdeckt, umfassen. Das Erzeugen des Messprogramms kann ein Debuggen umfassen.

Schritt i) 116 umfasst ein Bereitstellen eines Computermodells des Bauteils 112 und eines initialen Messprogramms zur Vermessung des Merkmals 110 des Bauteils 112 mit dem Messsystem 114. Das initiale Messprogramm kann ein Startmessprogramm zur Vermessung des Merkmals 110 des Bauteils 112 mit dem Messsystem 114 sein. Das Computermodel des Bauteils 112 kann einen digitalen Datensatz umfassen, welcher das reale Bauteil möglichst genau repräsentiert. Das Computermodell kann beispielsweise ein CAD-Modell sein und/oder umfassen. Das Computermodell kann dreidimensional oder zweidimensional sein. Das Computermodell kann zu Produkt- und Fertigungsinformationen des Bauteils 112 umfassen. Das Computermodell kann, alternativ oder zusätzlich, Messdaten, beispielsweise aus einer Prüfung und/oder einer Erfassung mindestens eines Merkmals 110 des Bauteils 112, und/oder Zusatzinformation zur Ausgestaltung des Bauteils 112 umfassen und/oder berücksichtigen. Das Computermodell des Bauteils 112 kann Design-Daten des Bauteils umfassen. Weiter kann das Computermodell Design-Daten einer Haltevorrichtung für das Bauteil 112 sowie Umgebungsbedingungen der Maschine umfassen. Das Bereitstellen kann ein Erzeugen und/oder ein Abfragen und/oder ein Abrufen und/oder ein Auswählen umfassen. Beispielsweise kann das Bereitstellen ein Abrufen von einer Datenquelle, beispielsweise einem Datenspeicher oder einer Datenbank, umfassen. Das Bereitstellen kann ein Laden, insbesondere ein Importieren, und/oder ein Generieren des Computermodells und/oder des initialen Mess-programms umfassen. Das Computermodell und/oder das initiale Messprogramm kann automatisch oder von einem Anwender ausgewählt werden von einer Mehrzahl von Computermodellen und/oder initialen Messprogrammen, beispielsweise unter Verwendung mindestens einer Anwenderschnittstelle.

Schritt ii) 118 umfasst ein Erzeugen einer initialen Punktewolke des Merkmals 110 durch Simulieren der Vermessung des Merkmals 110 unter Berücksichtigung des initialen Mess-programms mit dem Messsystem 114. Die initiale Punktewolke kann eine zu erwartende Punktewolke sein, welche bei einer Vermessung des Merkmals 110 anhand des initialen Messprogramms erzeugt würde. Das Simulieren kann mindestens einen Prozess eines Nachbildens einer realen Vermessung umfassen, insbesondere einer Vermessung in der Wirklichkeit. Beispielsweise kann das Simulieren unter Verwendung von ZEISS CALIGO erfolgen. Das Erzeugen der initialen Punktewolke kann unter Verwendung mindestens eines Prozessors 122, beispielswiese des Messsystems oder eines anderen Prozessors, erfolgen.

Schritt iii) 120 umfasst ein Bestimmen, unter Verwendung mindestens eines Prozessors 122, eines Ziel-Messprogramms durch Evaluieren der initialen Punktewolke unter Verwendung von historischen Daten, wobei die historischen Daten Referenz-Punktewolken von Referenzmerkmalen und zugehörigen Referenz-Messprogrammen umfassen. Das Ziel-Messprogramm kann ein Ergebnis der Schritte i) bis iii) sein. Das Ziel-Messprogramm kann ein nach dem Prozess des Debuggens erzeugtes und/oder angepasstes Messprogramm sein. Die historische Daten können mit dem Messsystem und/oder einem, dem Messsystem ähnlichen, Messsystem erzeugte historische Messdaten und/oder synthetische Daten umfassen. Die historischen Daten können reale Daten sein, welche über die Zeit aufgesammelt wurden. Die realen Daten können Daten umfassen, welche durch einen oder mittels einem ausgeführten Messprozess erzeugt und/oder entstanden und/oder erhalten worden sind bzw. aus diesen erhaltenen Daten abgeleitete Daten. Die realen Daten können eines oder mehreres: von dem Messsystem selbst, von einem Messsystem gleichen Typs stammen, von einem Messsystem eines anderen Typs aber gleicher Sensorart stammen. Ein ähnliches Messsystem kann beispielsweise eine Maschine vom gleichen Typ oder ein anderer Maschinentyp aber mit gleicher Sensorart verstanden werden.

Das Evaluieren kann mindestens einen Prozess umfassen ausgewählt aus der Gruppe bestehend aus: Durchführen mindestens einer mathematischen Operation, beispielsweise einer Transformation, Ausführen mindestens eines Algorithmus, Anwenden eines, beispielsweise durch maschinelles Lernen, trainierten Modelles auf die initiale Punktewolke und die historischen Daten. Beispielsweise kann das Evaluieren mindestens einen der folgenden Prozesse aufweisen: Ausführen eines Ähnlichkeitsvergleichs zwischen der (initialen) Punktewolke und mindestens einer Referenzpunktewolke aus den historischen Daten; Ausführen eines trainieren ML-Modelles, welches als Eingabe die initiale Punktewolke erhält und einen Vorschlag zu mindestens einem Teil des Ziel-Messpgrogramms generiert. Beispielsweise kann das Evaluieren mindestens einen der folgenden Prozesse aufweisen, insbesondere zusätzlich zu den zuvorgenannten: Auswertung einer Vollständigkeitsüberprüfung einer Punktewolke; Ausführung einer Anomalieerkennung auf einer Punktewolke, bspw. mit mindestens einem trainieren ML-Modell; und Ausführen der Bestimmung eines Qualitätsmaßes einer Punktewolke, bspw. mit mindestens einem trainieren ML-Modell. Die initiale Punktewolke kann direkt verarbeitet werden. Alternativ kann die initiale Punktwolke in eine andere Darstellung überführt werden, beispielsweise zu einem Graph. Auch eine Darstellung als Polygonnetz oder trianguliert ist denkbar. In Schritt iii) kann die initiale Punktewolke verwendet werden und/oder eine von dieser abgeleitete Information. Beispielsweise kann eine Evaluierung der initialen Punktewolke mittels einer feature extration erfolgen. Beispielsweise kann eine Evaluierung der initialen Punktewolke mittels eines Programms zur Verarbeitung der Punktewolke, welches die entsprechenden Punkte der Punktewolke automatisch ausfiltert und in ein Merkmalsergebnis berechnet, erfolgen.

Die historischen Daten umfassen Referenz-Punktewolken von Referenzmerkmalen und zugehörigen Referenz-Messprogrammen. Das Referenzmerkmal kann ein vorbekanntes, vordefiniertes, oder zeitlich früher gemessenes Merkmal sein. Das Referenz-Messprogramm kann ein vorbekanntes, vorbestimmtes, oder zeitlich früher erzeugtes Messprogramm sein, insbesondere zur Vermessung des Referenzmerkmals. Die Referenz-Punktewolke kann eine vorbekannte oder vorbestimmte und/oder zeitlich früher erzeugte Punktewolke sein, insbesondere eine unter Verwendung des Referenz-Messprogamms erzeugte Punktwolke bei der Vermessung des Referenz-Merkmals.

Beispielsweise können die historischen Daten Referenz-Punktewolken von Referenzmerkmalen mit, innerhalb von Toleranzen, gleichen Attributen wie das zu vermessende Merkmal 110 und Informationen zu den Attributen der Referenzmerkmale umfassen. Beispielsweise könnten die historischen Daten mehrere oder alle Referenz-Punktewolken umfassen, die mit dieser Art Messsystem für diese Art von Bauteilen aufgenommen wurden. Beispielsweise könnten die historischen Daten mehrere oder alle Referenz-Punktewolken umfassen, die mit diesem Messsystem aufgenommen wurden. Beispielsweise könnten die historischen Daten mehrere oder alle Daten aus der, bspw. geographischen, Region umfassen. Beispielsweise könnten die historischen Daten mehrere oder alle Daten eines Kunden und/oder einer Kundengruppe umfassen. Beispielsweise könnten die historischen Daten alle zur Verfügung stehenden Daten umfassen.

Schritt iii) 120 kann einen Vergleich der initialen Punktewolke und den historischen Referenz-Punktewolken umfassen. Der initialen Punktewolke ähnliche Referenz-Punktewolken können unter Berücksichtigung mindestens eines Ähnlichkeitsmaßes bestimmt werden. Als Ähnlichkeitsmaß kann mindestens eine Metrik verwendet werden, welche für zwei gegebene Punktewolken deren Ähnlichkeit bestimmt. Die Metrik kann ausgewählt sein aus der Gruppe bestehend aus: einer Earth-Mover-/Wasserstein-Distanz; einer Chamfer-Distanz; einer Hausdorff-Distanz, ein auf Basis von historischen Daten gelerntes Ähnlichkeitsmaß.

Beispielsweise kann der Vergleich, insbesondere insbesondere überwachtes (engl. supervised), kontrastive Lernen für Graphen (engl. Graph Contrastive learning) umfassen. Es kann ein ML-Modell trainiert werden, welches einen Graphen in eine Repräsentation überführt. So können ähnliche Graphen in ähnliche Repräsentationen überführt werden (d.h., kleinere Abstände in dem Repräsentationsraum), und unähnliche Graphen in unähnliche Repräsentationen (d.h., größere Abstände in dem Repräsentationsraum). Dieses kann für Pärchen von Graphen (ähnliche sollen nah zusammen, unähnlich sollen weit auseinander), oder mit Triplets (zwei ähnliche und ein unähnliches - die ähnlichen sollen näher zusammen als je ein ähnliches und ein unähnliches) erfolgen. Die Punktewolken können als Graphen verstanden werden, und die Information für "ähnlich" oder "unähnlich" bspw. aus den Attributen abgeleitet werden, beispielsweise gleiches Bauteil, gleiche Art Merkmal, gleiche Materialart, usw. Auf diese Art kann das Ähnlichkeitsmaß nicht festgelegt auf bestimmte Annahmen sein, wie etwa ähnliche Menge von Punkten, oder ähnliche Dichte der Punkte, usw., sondern es kann auf Basis von historischen Daten gelernt werden, wann Punktewolken "ähnlich" sind.

Beispielsweise kann der Vergleich selbst-überwachtes Lernen (engl. Self-supervised Learning) (für Graphen) umfassen. Es kann eine Darstellung für Graphen gelernt werden, welche die Menge an vorliegenden Graphen gut "beschreiben" kann. Dies kann bspw. erfolgen, in dem ein ML-Modell während des Trainings eine leicht modifizierte Version des Graphen als Input erhält, diese in eine Repräsentation überführen muss (encoding), und daraus den ursprünglichen Graphen wieder rekonstruiert (decoding). So kann das Modell lernen, eine relevante Darstellung für die auftretenden Variationen in den historischen Daten zu erzeugen. Nach dem Trainieren können dann die initiale Punktewolken sowie historische Punktewolken in die Repräsentation überführt werden (encoded) und die ähnlichste (mit geringstem Abstand im Repräsentationsraum) ausgewählt werden.

Historische Daten können zum Trainieren des ML-Modells verwendet werden. In den weiteren Schritten können die historischen Daten unberücksichtigt bleiben.

Die Attribute des zu vermessenden Merkmals 110 und der Referenzmerkmale können verglichen werden und von den ähnlichen Referenz-Punktewolken diejenige Referenz-Punktewolke mit den ähnlichsten Attributen ausgewählt werden. Das der ausgewählten Referenz-Punktewolke zugehörige Referenz-Messprogramm kann als das Ziel-Messprogramm bestimmt werden. Die Attribute können beispielsweise mindestens ein Attribut sein ausgewählt aus der Gruppe bestehend aus: Geometrische Soll-Abmessung; Position und Orientierung des Bauteils; Position und Orientierung des Merkmals am Bauteil; Materialeigenschaften; Farbe; Materialart; Rauheit; Glattheit; Glanzgrad bzw. Mattigkeit; Homogenität der Oberfläche; und Porosität der Oberfläche.

In Schritt iii) 120 kann mindestens eine Akzeptanzschwelle verwendet werden. Das Ziel-Messprogramm kann als Messprogramm für einen nachfolgenden Messschritt 132 verwendet werden, wenn die Akzeptanzschwelle eingehalten wird. Andernfalls, wenn die Akzeptanzschwelle nicht eingehalten wird, kann das Zielmessprogramm verworfen werden. Die Akzeptanzschwelle kann mindestens eine Toleranzgrenze hinsichtlich einer Ähnlichkeit der Referenz-Punktewolke und der initialen Punktewolke und/oder der Attribute des zu vermessenden Merkmals 110 und der Referenzmerkmale umfassen.

Nicht in jedem Fall kann das erzeugte Ziel-Messprogramm geeignet sein, in einer nachfolgenden Messung 132 verwendet zu werden. Beispielsweise kann das Ziel-Messprogramm des "ähnlichsten" Merkmals verworfen werden, wenn selbst das "ähnlichste" Merkmal noch dem zu vermessenden Merkmal zu unähnlich ist. Beispielsweise kann dies der Fall sein, wenn noch nie ein Loch vermessen wurde, und somit kein geeignetes Loch-Messprogramm vorliegt. In solchen Fällen kann die Akzeptanzschwelle dafür sorgen, dass nur "verlässliche" Vorschläge für das Ziel-Messprogramm angewendet werden. Beispielswiese kann ein Abgleich der Punktewolken-Ähnlichkeit sowie der Attributs-Abgleiche mit mindestens einem Schwellwert erfolgen. Das Verfahren kann ein Ausgeben einer Information über den Vergleich umfassen, beispielsweise einer Information, ob das Ziel-Messprogramm verwendet werden kann oder nicht, insbesondere eine Warnung falls das Ziel-Messprogramm nicht verwendet werden kann. Die Ausgabe kann mit einer Benutzerschnittstelle, beispielsweise einem Display 134, erfolgen. In dem Fall, dass das Ziel-Messprogramm nicht verwendet werden kann, kann ein manuelles Debugging durchgeführt werden.

In einer Ausführungsform kann das Verfahren zum Erzeugen des Messprogramms die folgenden Schritte aufweisen.

Schritt i) 116 kann die folgenden Schritte aufweisen:
- Erstellen ein "leeren" Messprogramms, beispielsweise eines Computerized Numerical Control (CNC)-Messprogramms. Das leere Messprogramm kann mit einer Messsoftware erzeugt werden. In das leere Messprogramm kann das Computermodell, bspw. ein CAD Model mit PMI (Product manufacturing information), des Bauteils oder eines Teils des Bauteils geladen werden.
- Laden der entsprechenden Messpunkte aus dem Computermodel und Verknüpfen dieser manuell oder automatisch zu einem initialen Messprogramm. Der Verfahrweg des Sensors, i.d.R. teilautomatisiert, kann definiert werden. Berücksichtigt werden können hierbei auch notwendige Umfahrwege, welche durch eine notwendige Haltevorrichtung notwendig sind.

Die Messsoftware kann beispielsweise ZEISS CALIGO, ZEISS INSPECT, ZEISS CALYPSO, ZEISS DMIS Engine, PC-DMIS^{®} von Hexagon^{®}, Metrologic von METROLOGIC^{®}, PolyWorks von InnovMetric Software Inc., oder eine andere Messsoftware sein, welche optische und taktile Sensorik an einem Verfahrgestell steuern und regeln kann. Die genannten Software Pakete werden hier rein exemplarisch genannt. Auch andere sind möglich. Die Messsoftware kann beispielsweise eingerichtet sein die Punktewolken auszuwerten und/oder bei welcher das Bauteil am fest installierten Sensor vorbeigeführt wird.

Das initiale Messprogramm kann das leere Messprogramm aus dem vorherigen Punkt sein, welches um die Verfahrwegsprogrammierung des Sensors erweitert wird und somit das initiale Messprogramm wird.

Schritt ii) 118 kann die folgenden Schritte aufweisen:
- Automatisiertes Erzeugen einer initialen Punktewolke aus den Designinformationen des aktuellen Merkmals auf dem Bauteil. Die Designinformationen des Merkmals können das Merkmal eindeutig bestimmen. So können ein oder mehrere von Positionierung des Merkmals am Bauteil im kartesischen System, Orientierung des Merkmals am Bauteil im kartesischen System, Merkmalstyp, Sollmaß, tolerierbare Abweichung (Toleranz), Sensorstellung wie Winkelstellung des Sensors zum Merkmal, Sensoreinstellung wie beispielsweise Belichtungseinstellung, Belichtungsdauer, Sensorverfahrgeschwindigkeit, und Sensorabstand zum Merkmal, Linienabstand, und/oder Filter, Punktewolkenausdünnung, Größe des Verarbeitungsfensters, Materialeigenschaften, Materialbearbeitung und weitere, das Material, das Bauteil und das Merkmal bezogene Eigenschaften, welche eine erzeugte Punktewolke beeinflussen können, definiert werden. Beispielsweise kann dieses durch die ZEISS CALIGO-Software (https://www.zeiss.de/messtechnik/produkte/software/caligo.html) erfolgen.

Schritt iii) 120 kann die folgenden Schritte aufweisen:
- Abgleich der initialen Punktewolke mit historischen Daten, wobei der Abgleich die folgenden Schritte umfasst:
   a. Verwenden eines Ähnlichkeitsmaß für Punktewolken, insbesondere einer Metrik, welche für zwei gegebene Punktewolken deren Ähnlichkeit bestimmt (bspw. Earth-Mover-/Wasserstein-Distanz, Chamfer-Distanz, Hausdorff-Distanz, oder ähnliche). Alternativ oder zusätzlich kann ein gelerntes Abstandsmaß, beispielsweise gelernt mittels contrastive learning, verwendet werden
   b. Bestimmen damit die Ähnlichkeit der initialen Punktewolke zu allen Referenz-Punktewolken der historischen Daten unter dem gewählten Ähnlichkeitsmaß. Die erste Ähnlichkeitsprüfung kann "beispielsweise 10 historische Referenz-Punktewolke" liefern. Eine Merkmale-Ähnlichkeitsprüfung kann im Schritt c. erfolgen.
   c. Suchen in den "ähnlichen" historischen Daten nach solchen Merkmalen, die ähnliche Attribute wie das aktuelle Merkmal aufweisen.

Ein Messprogramm des historischen Eintrags, welches ähnlich zur aktuellen Referenz-Punktewolke ist und im Wesentlichen gleiche Attribute aufweist, kann als Ziel-Messprogramm verwendet werden. Insbesondere kann mindestens eine Akzeptanzschwelle verwendet werden. In einem nachfolgenden Messschritt 132 (auch als Messung bezeichnet) kann das Ziel-Messprogramm verwendet werden. Das Messsystem 114 weist mindestens eine Steuerung 136 auf, welche eingerichtet ist den Sensor 124 zur Durchführung des Ziel-Messprogramms zu steuern. Der Prozessor 122 kann Teil der Steuerung 136 sein. Die in dem Ziel-Messprogramm definierten Einstellungen können automatisch für die Sensoreinstellungen ausgewählt werden. Die Messung 132 kann mit dem Ziel-Messprogramm durchgeführt werden, beispielweise Durchführen der Aufnahme, Bestimmen der Punktewolke, Durchführen der Analyse der aufgenommenen Messwerte.

Die durch die Messung 132 erhaltene Punktewolke kann bewertet werden, sowie das Analyse-Ergebnis. Das Messsystem 114 kann mindestens eine Auswerteeinheit 138 umfassen, welche eingerichtet ist, die von dem Sensor 124 erzeugten Messwerte auszuwerten. Die Auswerteeinheit 138 kann beispielsweise Teil des Prozessor 122 sein. Die Auswerteeinheit 138 kann eingerichtet sein, die mit dem Sensor 124 erzeugte Punktwolke zu bewerten, insbesondere durch einen Abgleich der Abdeckung der Punktwolke mit einem Bild des Merkmals. Die somit erhaltene Punktewolke kann zum Beispiel nicht für eine Weiterverarbeitung geeignet sein und daher für eine Messergebnisberechnung nicht sinnvoll sein. Die erhaltene Punktewolke kann aber auch eine gute Punktewolke sein, welche jedoch in einer falschen Auswerteebene zu einem Messergebnis ausgewertet wird und trotz guter Punktewolke daher ein falsches Ergebnis liefert. Eine Auswertung auf der richtigen Auswerteebene hingegen würde mit der guten Punktewolke zu einem guten Messergebnis führen. Um die erhaltene Punktewolke zu bewerten, kann eine manuelle Bewertung durch einen Nutzer oder Operator erfolgen, insbesondere durch Sichtprüfung. Beispielsweise kann auf einer Darstellungsfläche, bspw. einem Bildschirm, einem Fenster mit Holographie-Folie oder ähnlichem, die Punktewolke überlagert zu der Darstellung des Merkmals, bspw. das gerenderte Design, oder eine zusätzlich erstellte Kameraaufnahme, angezeigt werden und einem Nutzer präsentiert werden. Alternativ oder zusätzlich kann die Bewertung automatisch durch ein Computerprogramm erfolgen. Beispielsweise kann eine Auswertung einer Vollständigkeitsüberprüfung der Punktewolke erfolgen, insbesondere eine Bewertung ob die Punkte in der Nähe der Ebenen des Merkmals besetzt sind und ob die Ebenen dicht mit Punkten besetzt sind. Beispielsweise kann eine Ausführung einer Anomalieerkennung auf einer Punktewolke erfolgen, insbesondere ob Punkte an unerwarteten Stellen im Raum sind. Dieses kann bspw. mit einem trainieren ML-Modell erfolgen. Beispielsweise kann ein Ausführen der Bestimmung eines Qualitätsmaßes einer Punktewolke, bspw. Anzahl der Punkte, Entfernung der Punkte zueinander, Menge von Punkten entlang von Objektkanten und Abstand zu Objektkanten, usw., erfolgen. Dieses kann bspw. mit einem trainieren ML-Modell erfolgen.

Das Bewerten kann beispielsweise als Ergebnis haben "Punktewolke ist schlecht", oder "Punktewolke passt, aber Analyse passt nicht", oder "Punktewolke passt und Analyse passt".

Alternativ oder zusätzlich kann die Bewertung durch einen Anwender erfolgen. Das Ergebnis der Bewertung und der Analyse können gespeichert werden und als historische Daten bei einer nachfolgenden Durchführung des Verfahrens verwendet werden.

Sollte keine passende historische Information verfügbar sein, so kann das Verfahren abgebrochen werden oder das Ziel-Messprogramm verworfen werden. In dem nachfolgenden Messschritt kann der bisherige "default" verwendet werden. Das Verfahren kann mindestens einen Anzeigeschritt aufweisen. In dem Anzeigeschritt kann dem Anwender mindestens eine Information, beispielsweise mittels einer Anwenderschnittstelle, beispielsweise dem Display 134, angezeigt werden. Beispielweise kann die Information abgelehnte Punktewolken für ein einzelnes Prüfmerkmal innerhalb eines gesamten Zielmessprogramms mit mehreren Prüfmerkmalen und deren gute Punktewolken umfassen. Im CNC Messprogramm kann dieses automatisch gekennzeichnet werden um dem Anwender die schlechten Punktewolken gezielt darzustellen, damit diese manuell abgearbeitet, insbesondere korrigiert, werden können. Beispielsweise können die vom Anwender korrigierten und/oder abgelehnten Punktewolken für ein weiteres Trainieren des ML-Modells verwendet werden.

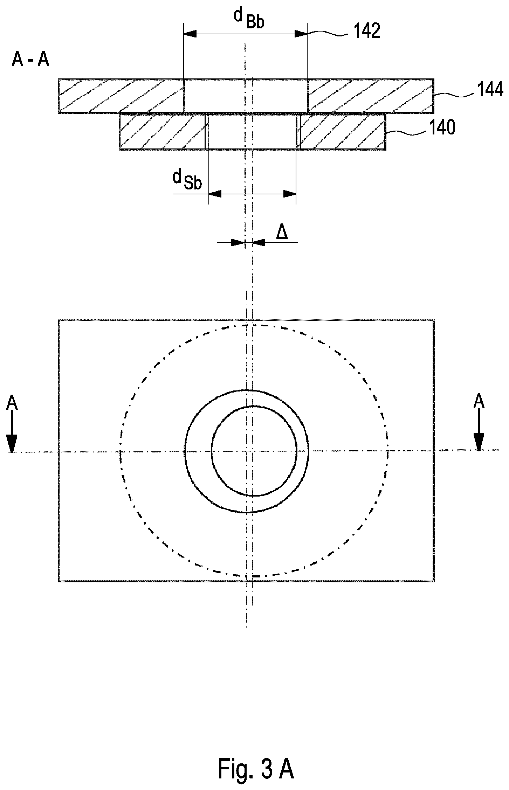

Nachfolgend wird nun anhand der Figuren 3A bis 3E mittels des Beispiels einer Schweißmutter 140 dargelegt, welche Messfehler bzw. Falschauswertungen auftreten können, wenn das erfindungsgemäße Verfahren bzw. die vorliegende Erfindung nicht eingesetzt wird.

Der untere Bereich der Figuren 3A bis 3E zeigt eine Draufsicht auf ein Bauteil 112, welches in diesem Beispiel eine Blechbohrung 142 mit Durchmesser d_{Bb} in ein rechteckiges Blech 144, mit der hinter das Blech 144 geschweißten Schweißmutter 140 mit einer Bohrung mit Durchmesser d_{Sb}, umfasst. Der obere Bereich von Figur 3A zeigt eine Seitenansicht mit Schnittzeichnung durch die Schnittebene AA des rechteckigen Blechs 144 mit runder Schweißmutter 140.

Wie in der Schnittzeichnung von Figur 3A erkennbar ist, besteht ein Versatz zwischen der inneren Bohrung der Schweißmutter 140 und der Blechbohrung 142, welche in der Figur 3A mit Δ gekennzeichnet ist. Der äußere Rand der runden Schweißmutter 140 ist im unteren Teil der Figur 3A strichpunktiert wiedergegeben.

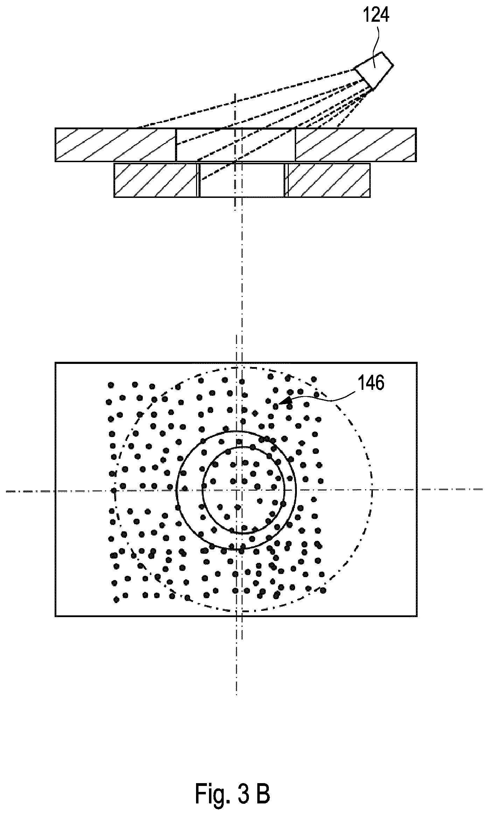

In Figur 3B ist nun eine Messsituation gezeigt, in der das Bauteil 112 der Figur 3A mittels eines optischen Sensors 124 vermessen wird, wodurch sich eine aus der Messung rekonstruierte Punktewolke 146 ergibt, welche die innere Bohrung der Schweißmutter 140 und die Blechbohrung 142 überdeck. Zur Durchführung der Messung projiziert der optische Sensor 124 zum Beispiel eine Laserlinie im Falle eines Triangulationssensors 124 oder zum Beispiel ein Streifenmuster im Falle eines Streifenprojektors 124 auf das Bauteil 112, wie dies im oberen Teil der Figur 3B gezeigt ist. Die Auftrefforte der Laserlinie oder der Streifen auf dem Bauteil 112 können anschließend mittels einer oder mehreren Bildaufnahmen des optischen Sensors 124 zu einer rekonstruierten Punktewolke 146 des vermessenen Bauteils 112 weiterverarbeitet werden. Die im unteren Teil der Figur 3B dargestellte Punktewolke 146 kann daher in der Darstellung einen quadratischen Querschnitt entsprechend einem für die Bildaufnahme genutzten quadratischen Bildsensor des optischen Sensors 124 auf.

Um eine erhaltene Punktewolke 146 zu bewerten, musste bisher eine manuelle Bewertung durch einen Nutzer oder Operator erfolgen, insbesondere durch Sichtprüfung z.B. mittels der Programmiersoftware CALIGO. Beispielsweise musste, wie in Figur 3B gezeigt, auf einer Darstellungsfläche die Punktewolke überlagert zu der Darstellung des Merkmals angezeigt und einem Nutzer präsentiert werden. Dieser manuelle Überprüfungsschritt kann durch das erfindungsgemäße Verfahren entfallen, insbesondere, wenn der erste "verbesserte" Vorschlag passt. Die bisherige manuelle Anpassung der Scanparameter nach dem ersten Misserfolg kann durch eine automatische, insbesondere besser passende, erste Scaneinstellung ersetzt werden. Das erste manuelle Überprüfen und/oder Anpassen kann entfallen. Ein Überprüfen kann zusätzlich erfolgen. Eine bisherige manuelle Bewertung kann durch eine automatische Bewertung ersetzt werden.

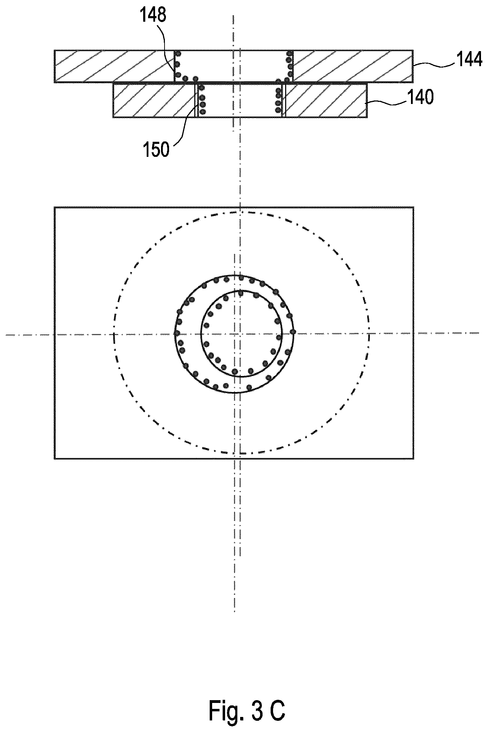

Figur 3C zeigt ein Beispiel, in welchem die erhaltene Punktewolke 146 sowohl für das Blech 144 als auch die Schweißmutter 140 "gut" sein kann, jedoch in einer falschen Auswerteebene, trotz guter Punktewolke, ein falsches Ergebnis liefert. Dies kann zum Beispiel dadurch geschehen, dass die Punktewolke für die Blechbohrung 142 des Blechs 144 nicht in der richtigen, horizontalen Ebene am Punkt 148 durch das Messprogramm ausgewertet wird, sondern in einer darunter liegenden, horizontalen Ebene am Punkt 150 relativ zu dem CAD-Modell des Bauteils 112 ausgewertet wird. Umgekehrt kann auch die Punktewolke für die Bohrung der Schweißmutter nicht in der richtigen, horizontalen Ebene am Punkt 150 durch das Messprogramm relativ zu dem CAD-Modell des Bauteils 112 ausgewertet werden, sondern in der darüber liegenden Ebene am Punkt 148. In den beiden geschilderten Fällen würde dann eine, an sich gute Punktewolke durch die Wahl der falschen Auswerteebene des CAD-Modells zu falschen Messergebnissen führen. Insofern ist zur Erzielung von ordentlichen Messergebnissen in einer Messsituation neben einem ordentlichen Messprozess auch die Wahl der richtigen, zu den Punktewolken passenden Bezugs- bzw. Auswerteebenen des CAD-Modells entscheidend.

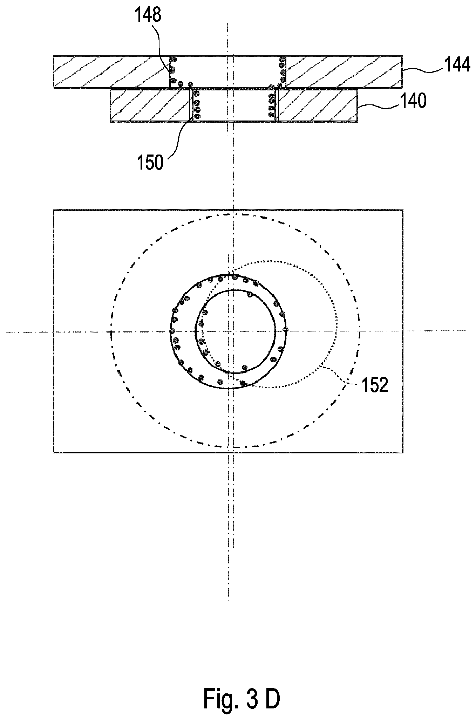

Figur 3D zeigt ein Beispiel, in welchem die aus der Messung erhaltene Punktewolke 146 aufgrund der geringen und asymmetrisch um den Bohrumfang verteilten Daten schlecht für die Auswertung der Bohrung der Schweißmutter 140 ist. Wenn die horizontale Auswerteebene zu Punkt 150 für die Auswertung der Bohrung der Schweißmutter 140 zur Berechnung verwendet wird, kann ein falsches Ergebnis berechnet werden, da zu wenige Punkte für die Berechnung verwendet werden und da aufgrund der Asymmetrie der Daten ein zu großer Kreis 152 angepasst und somit die Position der Schweißmutter falsch berechnet wird. Die aus der Messung erhaltene Punktewolke 146 führt also bei dem Beispiel der Figur 3D zu einer nicht genügend guten Anzahl an Datenpunkten zur Berechnung des Kreisdurchmessers der Bohrung der Schweißmutter 140.

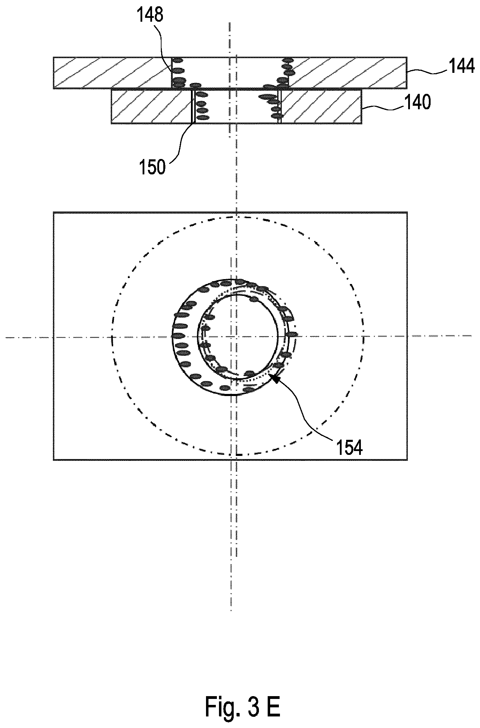

Figur 3E zeigt ein Beispiel, für eine ungenügende Bestimmung des Durchmessers der Blechbohrung 142 des Blechs 144 in einer horizontalen Auswerteebene in Punkt 148 sowie der Position und des Durchmessers der Bohrung der Schweißmutter 140 in einer horizontalen Auswerteebene in Punkt 150 aufgrund von einer zu hohen Scangeschwindigkeit des optischen Sensors 124 beim Messprozess. In diesem Beispiel ist die erhaltene Punktewolke 146 schlecht und die ausgewerteten Punkte sind verzogen bzw. unscharf sowohl für das Blech 144 als auch die Schweißmutter 140. Wenn die Auswerteebene 150 für die Schweißmutter 140 zur Berechnung verwendet wird, kann somit ein falsches Ergebnis berechnet werden, da Punkte für die Berechnung verwendet werden, welche nicht scharf ausgewertet werden können. Es wird ein zu großer oder zu kleiner Kreis berechnet. Die Position der Schweißmutter 140 als auch der Durchmesser der Schweißmutter sind daher falsch und nicht vertrauenswürdig. Figur 3E zeigt exemplarisch eine Visualisierung 154 einer falschen Berechnung des Kreises aufgrund einer unscharfen Punktewolke und einer nicht reproduzierbaren Ermittlung des Durchmessers.

Alle diese im Zusammenhang mit den Figuren 3C bis 3E geschilderten Fehlauswertungen des exemplarischen Bauteils 112, einer an ein Blech 144 angeschweißten Schweißmutter 140, sei es durch eine falsche Wahl der Bezugsebenen (Beispiel Figur 3C) des Bauteils 112 innerhalb des Messprogramms, sei es durch eine ungenügende Anzahl von Datenpunkten durch eine ungeschickten Wahl der Pose des optischen Sensors 124 bei der Vermessung des Bauteils 112 (Beispiel Figur 3D) oder sei es durch eine zu hoch gewählte Scangeschwindigkeit des optischen Sensors 124 bei der Vermessung des Bauteils 112 (Figur 3E) lassen sich nun durch die vorliegende Erfindung, insbesondere durch die in den Ansprüchen geschilderten Ausführungsformen der vorliegenden Erfindung vermeiden, indem ein Computermodell des Bauteils 112 und ein initiales Messprogramm zur Vermessung eines Merkmals 110 des Bauteils 112 mit dem Messsystem 114 bereitgestellt; eine initiale Punktewolke des Merkmals 110 durch Simulieren der Vermessung des Merkmals des Bauteils 112 unter Berücksichtigung des initialen Messprogramms mit dem Messsystem 114 erzeugt; und unter Verwendung mindestens eines Prozessors 122, ein Ziel-Messprogramms durch Evaluieren der initialen Punktewolke unter Verwendung von historischen Daten, wobei die historischen Daten Referenz-Punktewolken von Referenzmerkmalen und zugehörigen Referenz-Messprogrammen umfassen, bestimmt wird.

### Bezugszeichenliste

- 110: Merkmal
- 112: Bauteil
- 114: Messsystem
- 116: Schritt i)
- 118: Schritt ii)
- 120: Schritt iii)
- 122: Prozessor
- 124: Sensor
- 126: Messtisch
- 128: Portal
- 130: Pinole
- 132: Messschritt
- 134: Display
- 136: Steuerung
- 138: Auswerteeinheit
- 140: Schweißmutter
- 142: Blechbohrung
- 144: Blech
- 146: erhaltene Punktewolke
- 148: Punkt einer ersten horizontalen Auswerteebene
- 150: Punkt einer zweiten horizontalen Auswerteebene
- 152: zu großer Kreis
- 154: Visualisierung einer falschen Berechnung des Kreises

## Patentansprüche

1. Computer-implementiertes Verfahren zum Erzeugen eines Messprogramms für eine Vermessung mindestens eines Merkmals (110) eines Bauteils (112) mit einem, eine Punktewolke erzeugendem, Messsystem (114), wobei das Verfahren die folgenden Schritte umfasst:
i) (116) Bereitstellen eines Computermodells des Bauteils (112) und eines initialen Messprogramms zur Vermessung des Merkmals (110) des Bauteils (112) mit dem Messsystem (114);
ii) (118) Erzeugen einer initialen Punktewolke des Merkmals (110) durch Simulieren der Vermessung des Merkmals des Bauteils (112) unter Berücksichtigung des initialen Messprogramms mit dem Messsystem (114);
iii) (120) Bestimmen, unter Verwendung mindestens eines Prozessors (122), eines Ziel-Messprogramms durch Evaluieren der initialen Punktewolke unter Verwendung von historischen Daten, wobei die historischen Daten Referenz-Punktewolken von Referenzmerkmalen und zugehörigen Referenz-Messprogrammen umfassen.

2. Verfahren nach dem vorhergehenden Anspruch, wobei das Messsystem (114) mindestens einen Sensor (124) umfasst ausgewählt aus der Gruppe bestehend aus: einem optischen Sensor; einem taktilen Sensor, einem Temperatursensor, einem Röntgensensor.

3. Verfahren nach einem der vorhergehenden Ansprüche, wobei das Messprogramm Informationen über mindestens eine Einstellung umfasst ausgewählt aus der Gruppe bestehend aus: Sensoreinstellung, insbesondere Beleuchtungsintensität, Beleuchtungsdauer, Aufnahmedauer, Empfindlichkeit, Blendenöffnung, Sensorstellung zum Bauteil (112), insbesondere Abstand und/oder Winkel zum Bauteil (112), Information über Start- und Endpunkt, Information über Verfahrweg, Information über Geschwindigkeit, Information über Beschleunigung, Information über. zum Verfahren entlang des Verfahrwegs.

4. Verfahren nach einem der vorhergehenden Ansprüche, wobei das zu vermessende Merkmal (110) mindestens einen Teilbereich des Merkmals (110) und/oder des Bauteils umfasst, wobei das Verfahren ein Erzeugen eines Messprogramms für den mindestens einen Teilbereich des Merkmals (110) und/oder des Bauteils umfasst, wobei die Schritte i) bis iii) für den mindestens einen Teilbereich des Merkmals (110) und/oder des Bauteils durchgeführt werden, und/oder wobei das Verfahren ein Erzeugen eines Messprogramms für Mehrzahl von Merkmalen (110) umfasst, wobei die Schritte i) bis iii) für jedes Merkmal (110) durchgeführt werden, wobei das Verfahren ein Zusammenfügen der Ziel-Messprogramme der einzelnen Merkmale (110) umfasst.

5. Verfahren nach einem der vorhergehenden Ansprüche, wobei in Schritt iii) die initiale Punktewolke verwendet wird und/oder eine von dieser abgeleitete Information verwendet wird.

6. Verfahren nach einem der vorhergehenden Ansprüche, wobei die historischen Daten Referenz-Punktewolken von Referenzmerkmalen mit, innerhalb von Toleranzen, gleichen Attributen wie das zu vermessende Merkmal (110) und Informationen zu den Attributen der Referenzmerkmale umfassen, wobei Schritt iii) einen Vergleich der initialen Punktewolke und den historischen Referenz-Punktewolken umfasst, wobei der initialen Punktewolke ähnliche Referenz-Punktewolken unter Berücksichtigung mindestens eines Ähnlichkeitsmaßes bestimmt werden, wobei die Attribute des zu vermessenden Merkmals und der Referenzmerkmale verglichen werden und von den ähnlichen Referenz-Punktewolken diejenige Referenz-Punktewolke mit den ähnlichsten Attributen ausgewählt wird, wobei das der ausgewählten Referenz-Punktewolke zugehörige Referenz-Messprogramm als das Ziel-Messprogramm bestimmt wird, wobei als Ähnlichkeitsmaß mindestens eine Metrik verwendet wird, welche für zwei gegebene Punktewolken deren Ähnlichkeit bestimmt, wobei die Metrik ausgewählt ist aus der Gruppe bestehend aus: einer Earth-Mover-/Wasserstein-Distanz; einer Chamfer-Distanz; einer Hausdorff-Distanz, ein auf Basis von historischen Daten gelerntes Ähnlichkeitsmaß.

7. Verfahren nach dem vorhergehenden Anspruch, wobei die Attribute mindestens eine Eigenschaft des Merkmals (110) umfasst ausgewählt aus der Gruppe bestehend aus: Geometrische Soll-Abmessung; Position und Orientierung des Bauteils (112); Position und Orientierung des Merkmals am Bauteil (112); Materialeigenschaften; Farbe; Materialart; Rauheit; Glattheit; Glanzgrad bzw. Mattigkeit; Homogenität der Oberfläche; und Porosität der Oberfläche.

8. Verfahren nach einem der zwei vorhergehenden Ansprüche, wobei in Schritt iii) mindestens eine Akzeptanzschwelle verwendet wird, wobei das Ziel-Messprogramm als Messprogramm für einen nachfolgenden Messschritt verwendet wird, wenn die Akzeptanzschwelle eingehalten wird, und andernfalls verworfen wird, wobei die Akzeptanzschwelle mindestens eine Toleranzgrenze hinsichtlich einer Ähnlichkeit der Referenz-Punktewolke und der initialen Punktewolke und/oder der Attribute des zu vermessenden Merkmals (110) und der Referenzmerkmale umfasst.

9. Verfahren nach einem der vorhergehenden Ansprüche, wobei in Schritt iii) mindestens ein mittels maschinellen Lernen trainiertes Modell verwendet wird, wobei das trainierte Modell eingerichtet ist zur Vorhersage des Ziel-Messprogramms, wobei die initiale Punktewolke und Informationen über Attribute des Merkmals (110) als Eingang für das trainierte Modell verwendet werden, wobei das trainierte Modell auf mindestens einem Trainingsdatensatz trainiert wurde, wobei der Trainingsdatensatz die historischen Daten umfasst.

10. Verfahren nach dem vorhergehenden Anspruch, wobei das Verfahren mindestens einen Messschritt umfasst, in welchem das Merkmal (110) des Bauteils (112) mit dem Messsystem (114) unter Verwendung des erzeugten Ziel-Messprogramms vermessen wird, wobei das Verfahren ein Bewerten der von dem Messsystem (114) erzeugten Punktewolke und ein Speichern von Daten zu Messprogramm, Punktewolke und einer Information über die Bewertung umfasst, wobei das Verfahren ein erneutes Trainieren des trainierten Modells umfasst unter Berücksichtigen der gespeicherten Daten.

11. Verfahren nach einem der zwei vorhergehenden Ansprüche, wobei in Schritt iii) mindestens eine Akzeptanzschwelle verwendet wird, wobei das Ziel-Messprogramm als Messprogramm für einen nachfolgenden Messschritt verwendet wird, wenn die Akzeptanzschwelle eingehalten wird, und andernfalls verworfen wird, wobei die Akzeptanzschwelle eine Toleranzgrenze hinsichtlich einer Unsicherheit der Vorhersage des trainierten Modells umfasst.

12. Verfahren zur Vermessung mindestens eines Merkmals (110) eines Bauteils (112) mit einem, eine Punktewolke erzeugendem, Messsystem (114), wobei das Verfahren die folgenden Schritte umfasst:
iv) Erzeugen eines Messprogramms unter Verwendung eines Verfahrens zum Erzeugen eines Messprogramms nach einem der vorhergehenden Ansprüche;
v) Durchführen einer Vermessung des Merkmals (110) eines Bauteils (112) mit einem, eine Punktewolke erzeugendem, Messsystem (114) unter Verwendung des erzeugten Messprogramms.

13. Ein Messsystem (114), wobei das Messsystem (114) eingerichtet ist, ein Verfahren zur Vermessung nach dem vorhergehenden Anspruch durchzuführen, wobei das Messsystem (114) mindestens einen Sensor (124) umfasst, wobei das Messsystem (114) mindestens eine Steuerung (136) umfasst, welche eingerichtet ist, den Sensor (124) zur Durchführung des Ziel-Messprogramms zu steuern.

14. Computerprogramm, welches bei Ablauf auf einem Computer oder Computernetzwerk, insbesondere eines Messsystems (114) nach dem vorhergehenden Anspruch, ein Verfahren zum Erzeugen eines Messprogramms für eine Vermessung mindestens eines Merkmals (110) eines Bauteils (112) mit einem, eine Punktewolke erzeugendem, Messsystem (114) nach einem der vorhergehenden, ein Verfahren zum Erzeugen eines Messprogramms betreffenden, Ansprüche, insbesondere die Verfahrensschritte i) bis iii), und/oder ein Verfahren zur Vermessung mindestens eines Merkmals (110) eines Bauteils (112) nach Anspruch 12 ausführt.

15. Computerprogramm-Produkt mit auf einem maschinenlesbaren Träger gespeicherten Programmcode-Mitteln, um ein Verfahren um Erzeugen eines Messprogramms für eine Vermessung mindestens eines Merkmals (110) eines Bauteils (112) mit einem, eine Punktewolke erzeugendem, Messsystem (114) nach einem der vorhergehenden, ein Verfahren zum Erzeugen eines Messprogramms betreffenden, Ansprüche und/oder ein Verfahren zur Vermessung mindestens eines Merkmals (110) eines Bauteils (112) nach Anspruch 12, durchzuführen, wenn das Programm auf einem Computer oder ComputerNetzwerk, insbesondere eines Messsystems nach Anspruch 13, ausgeführt wird.
